(19) Europäisches Patentamt
European Patent Office
Office européen des brevets

(11) **EP 4 685 791 A1**

(12) **EUROPEAN PATENT APPLICATION**

(43) Date of publication:
**28.01.2026 Bulletin 2026/05**

(51) International Patent Classification (IPC):
**G10L 15/26** (2006.01)  **G06F 40/30** (2020.01)
**G10L 17/00** (2013.01)  **G10L 15/18** (2013.01)

(21) Application number: **25190439.7**

(22) Date of filing: **18.07.2025**

(52) Cooperative Patent Classification (CPC):
**G10L 17/00; G06F 40/30; G10L 15/1822;
G10L 15/26**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.07.2024 KR 20240098174**

(71) Applicant: **LG Electronics Inc.
Yeongdeungpo-gu
Seoul 07336 (KR)**

(72) Inventor: **DO, Jiwon
Seoul (KR)**

(74) Representative: **Vossius & Partner
Patentanwälte Rechtsanwälte mbB
Siebertstrasse 3
81675 München (DE)**

(54) **SERVER AND SYSTEM INCLUDING SAME**

(57)    A server and a system including the same are disclosed. The server according to one embodiment of the present disclosure comprises a communication interface that communicates with an electronic device, a database that stores usage histories of text usage classified by characteristics, and a controller, wherein the controller generates a plurality of first texts corresponding to a voice signal received from the electronic device, generates first identification information corresponding to the voice signal, obtains one or more user characteristics corresponding to the voice signal based on the first identification information, determines a second text corresponding to the voice signal among the plurality of first texts based on a first text history describing how each of the plurality of first texts is used in association with the user characteristics among the usage histories of text classified by characteristics, and transmits a result of performing intent analysis for the second text to the electronic device.

FIG. 4

EP 4 685 791 A1

**Description**

BACKGROUND OF THE INVENTION

**1. Field of the invention**

The present disclosure relates to a server and a system including the same, and more specifically, to a server and a system including the same that utilize speech recognition technology.

**2. Description of the Related Art**

With the recent development of technology, research on speech recognition technology for processing speech is being actively conducted. In particular, research on speech recognition technology, which began with smartphones, is being conducted widely in various fields related to user convenience, such as vehicles, as well as home appliances used at home and in offices.

Speech recognition technology is commonly used when a user controls an electronic device using his or her voice. For example, when a user utters a command to control an electronic device, the electronic device may directly recognize and process user's speech and operate according to the command related to the speech, or may send the speech to a server that processes speech and then operate according to a command related to the speech received from the server.

Meanwhile, services or functions provided through electronic devices are becoming increasingly diverse. Additionally, users register accounts for various services and then use the services by logging in with the registered account. In this case, service providers use user information managed for each account to provide optimal functions or information tailored to the user.

Conventionally, when attempting to log in to use a service, a user needs to directly input account information, for example, an identification (ID) and/or a password of the account. However, it is inconvenient for a user to input account information one by one into various services. Additionally, if a user remains logged in to eliminate the inconvenience of inputting account information, security problems such as access to the user's account information by others may occur. Additionally, when multiple users use one electronic device together, there is a problem that multiple users need to input their account information and log in each time they use a service.

SUMMARY OF THE INVENTION

Therefore, the present disclosure has been made in view of the above problems, and it is an object of the present disclosure to solve the above-described problems and other problems.

Another object of the present disclosure is to provide a server and a system including the same capable of registering identification information on user voice in a user account.

A further object of the present disclosure is to provide a server and a system including the same capable of identifying a user based on user voice.

A further object of the present disclosure is to provide a server and a system including the same capable of improving accuracy of a result of processing user voice based on characteristics of the user identified from the user voice.

A further object of the present disclosure is to provide a server and a system including the same capable of improving accuracy of a result of processing user voice based on the user characteristics included in the data for the user account.

A further object of the present disclosure is to provide a server and a system including the same capable of updating a database used for processing user voice using the usage history of the user.

To achieve the objects above, a server according to one embodiment of the present disclosure comprises a communication interface that communicates with an electronic device, a database that stores usage histories of text classified by characteristics, and a controller, wherein the controller generates a plurality of first texts corresponding to a voice signal received from the electronic device, generates first identification information corresponding to the voice signal, obtains one or more user characteristics of the user corresponding to the voice signal based on the first identification information, determines a second text corresponding to the voice signal among the plurality of first texts based on a first text history describing how each of the plurality of first texts is used in association with the user characteristics among the usage histories of text classified by characteristics, and transmits a result of performing intent analysis for the second text to the electronic device.

To achieve the objects above, a system according to one embodiment of the present disclosure includes an electronic device and a server, wherein the electronic device transmits data including a speech signal to the server when the voice signal is received through a user input interface and outputs a result of performing intent analysis on the voice signal received from the server, wherein the server generates a plurality of first texts corresponding to the voice signal received from the electronic device, generates first identification information corresponding to the voice signal, obtains one or more user characteristics corresponding to the voice signal based on the first identification information, determines a second text corresponding to the voice signal among the plurality of first texts based on a first text history describing how each of the plurality of first texts is used in association with the user characteristics among usage histories of text classified by characteristics stored in a database of the server, and transmits a result of performing intent analysis for the second text to the electronic device as a result of performing intent analysis on the voice signal.

In what follows, advantageous effects of an electronic device and a system including the same according to the present disclosure are described.

According to at least one embodiment of the present disclosure, identification information for user voice may be registered to the account of the user.

According to at least one embodiment of the present disclosure, a user may be identified based on the user voice.

According to at least one embodiment of the present disclosure, accuracy of a result of processing the user voice may be improved based on the user characteristics identified from the user voice.

According to at least one embodiment of the present disclosure, accuracy of a result of processing the user voice may be improved based on the user characteristics included in the data for the user account.

According to at least one embodiment of the present disclosure, a database used for processing of the user voice may be updated using the usage history of the user.

Additional scope of applicability of the present disclosure will become apparent from the detailed description that follows. However, since various changes and modifications within the scope of the present disclosure may be clearly understood by those skilled in the art, the detailed description and specific embodiments such as preferred embodiments of the present disclosure should be understood as being given only as examples.

## BRIEF DESCRIPTION OF THE DRAWINGS

FIG. 1 is a diagram illustrating a system according to an embodiment of the present disclosure.
FIG. 2 is an internal block diagram of an electronic device of FIG. 1.
FIG. 3 is a diagram referenced in description of a server of FIG. 1.
FIG. 4 is a block diagram illustrating a configuration of a server according to an embodiment of the present disclosure.
FIG. 5 is a diagram illustrating an example of converting a speech signal into a power spectrum according to an embodiment of the present disclosure.
FIG. 6 is a block diagram illustrating the configuration of a controller for speech recognition and synthesis of an electronic device, according to an embodiment of the present disclosure.
FIG. 7 is a flowchart of a method of operating an electronic device according to an embodiment of the present disclosure.
FIG. 8 is a flowchart of a method of operating a system according to an embodiment of the present disclosure.
FIGS. 9 to 13 are diagrams referenced in description of a process of registering identification information on a user voice in a user account according to an embodiment of the present disclosure.
FIG. 14 is a flowchart of a method of operating a server according to an embodiment of the present disclosure.
FIGS. 15 to 21 are diagrams referenced in description of provision of a result of processing a user voice according to embodiments of the present disclosure.

## DETAILED DESCRIPTION OF THE PREFERRED EMBODIMENTS

Hereinafter, the present disclosure will be described in detail with reference to the attached drawings. In the drawings, parts not related to description are omitted in order to clearly and briefly describe the present disclosure, and identical or extremely similar parts are denoted by the same reference numerals throughout the specification.

The suffixes "module" and "part" for components used in the following description are simply given in consideration of the ease of writing this specification and do not have any particularly important meaning or role. Accordingly, the terms "module" and "part" may be used interchangeably.

In the present disclosure, it will be further understood that the term "comprise" or "include" specifies the presence of a stated feature, figure, step, operation, component, part or combination thereof, but does not preclude the presence or addition of one or more other features, figures, steps, operations, components, or combinations thereof.

Further, in this specification, the terms "first" and/or "second" are used to describe various components, but such components are not limited by these terms. The terms are used to discriminate one component from another component.

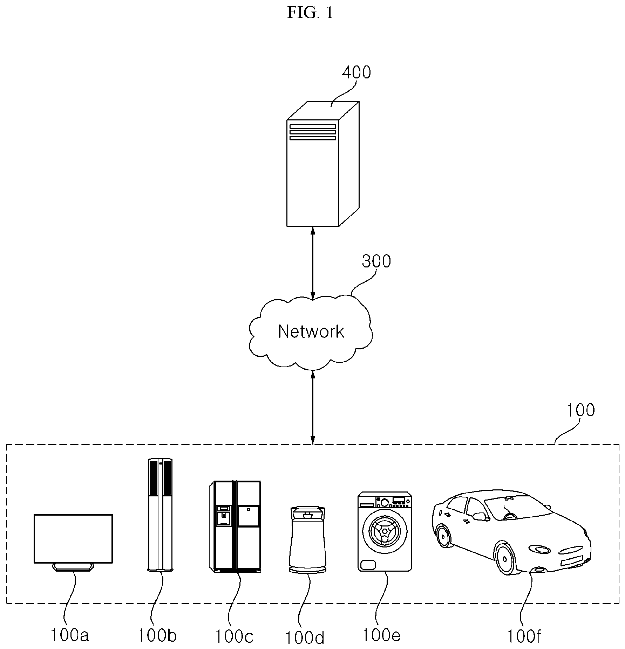

FIG. 1 is a diagram illustrating a system according to various embodiments of the present disclosure.

Referring to FIG. 1, the system 10 may include an electronic device 100 and/or a server 400.

The electronic device 100 may transmit/receive data to/from at least one server 400. For example, the electronic device 100 may transmit/receive data to/from the at least one server 400 via a network 300 such as the Internet.

According to an embodiment, the at least one server 400 may include a server that performs speech recognition, a server that processes data using a super-giant artificial intelligence model, a server that provides content, and the like.

The electronic device 100 may include an image display device 100a, an air conditioner 100b, a refrigerator 100c, an air purifier 100d, a washing machine 100e, a vehicle 100f, and the like. Although the electronic device 100 is an image display device 100a in the present disclosure, the present disclosure is not limited thereto.

The image display device 100a may be a device that processes and outputs images. The image display device 100a is not particularly limited as long as it can output a screen related to video signals, such as a TV, a laptop computer, or a monitor.

The image display device 100a may receive a broadcast signal, process the same, and output a processed broadcast image. When the image display device 100a receives a broadcast signal, the image display device 100a may correspond to a broadcast reception device.

The image display device 100a may receive broadcast signals wirelessly through an antenna, or may receive broadcast signals through a cable. For example, the image display device 100a may receive terrestrial broadcast signals, satellite broadcast signals, cable broadcast signals, and Internet protocol Television (IPTV) broadcast signals.

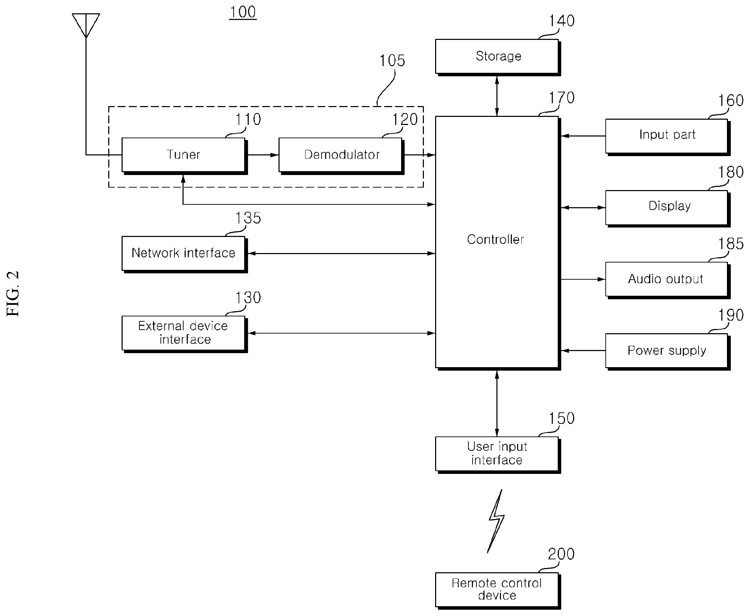

FIG. 2 is an internal block diagram of the electronic device of FIG. 1.

Referring to FIG. 2, the electronic device 100 may include a broadcast receiver 105, an external device interface 130, a network interface 135, a storage 140, a user input interface 150, an input part 160, a controller 170, a display 180, an audio output part 185, and/or a power supply 190.

The broadcast receiver 105 may include a tuner 110 and a demodulator 120.

Meanwhile, the electronic device 100 may include only the broadcast receiver 105 and the external device interface 130 among the broadcast receiver 105, the external device interface 130, and the network interface 135. That is, the electronic device 100 may not include the network interface 135.

The tuner 110 may select a broadcast signal related to a channel selected by a user or broadcast signals of all previously stored channels among broadcast signals received through an antenna (not shown) or a cable (not shown). The tuner 110 may convert the selected broadcast signals into intermediate frequency signals or baseband video or audio signals.

For example, if a selected broadcast signal is a digital broadcast signal, the tuner 110 may convert the selected broadcast signal into a digital IF signal (DIF), and if the selected broadcast signal is an analog broadcast signal, convert the same into an analog baseband video or audio signal (CVBS/SIF). That is, the tuner 110 may process digital broadcast signals or analog broadcast signals. The analog base band video or audio signal (CVBS/SIF) output from the tuner 110 may be directly input to the controller 170.

Meanwhile, the tuner 110 may sequentially select broadcast signals of all of stored broadcast channels through a channel memory function among received broadcast signals and convert the same into intermediate frequency signals or baseband video or audio signals.

The tuner 110 may include a plurality of tuners in order to receive broadcast signals of a plurality of channels. Alternatively, a single tuner that simultaneously receives broadcast signals of a plurality of channels may also be adopted.

The demodulator 120 may receive a digital IF signal (DIF) converted by the tuner 110 and perform a demodulation operation.

The demodulator 120 may output a stream signal TS after performing demodulation and channel decoding. Here, the stream signal may be a multiplexed video signal, audio signal, or data signal.

The stream signal output from the demodulator 120 may be input to the controller 170. After performing demultiplexing and video/audio signal processing, the controller 170 may output video through the display 180 and output audio through the audio output part 185.

The external device interface 130 may transmit/receive data to/from a connected external device. To this end, the external device interface 130 may include an A/V input/output part (not shown).

The external device interface 130 may be connected to external devices such as a digital versatile disc (DVD) player, a Blu-ray player, a game console, a camera, a camcorder, a computer (laptop), a set-top box, and the like in wired/wireless manners, and may also perform input/output operations with respect to external devices.

In addition, the external device interface 130 may establish a communication network with respect to various remote control devices 200 to receive control signals related to the operation of the electronic device 100 from the remote control devices 200 or to transmit data related to the operation of the electronic device 100 to the remote control devices 200.

The A/V input/output part may receive video and audio signals from an external device. For example, the A/V input/output part may include an Ethernet terminal, a USB terminal, a composite video banking Sync (CVBS) terminal, a component terminal, an S-video terminal (analog), a digital visual interface (DVI) terminal, a high definition multimedia interface (HDMI) terminal, a mobile high-definition link (MHL) terminal, an RGB terminal, a D-SUB terminal, an IEEE 1394 terminal, an SPDIF terminal, a liquid HD terminal, and the like. Digital signals input through these terminals may be transmitted to the controller 170. Here, analog signals input through the CVBS terminal and the S-video terminal may be converted into digital signals through an analog-to-digital converter (not shown) and transmitted to the controller 170.

The external device interface 130 may include a wireless communication part (not shown) for short-distance wireless communication with other electronic devices. The external device interface 130 may exchange data with a neighboring mobile terminal through the wireless communication part. For example, the external device interface 130 may receive device information, executing application information, application images, and the like from the mobile terminal in a mirroring mode.

The external device interface 130 may perform short-range wireless communication using Bluetooth, radio frequency identification (RFID), infrared data association (IrDA), ultra-wideband (UWB), ZigBee, and the like.

The network interface 135 may provide an interface for connecting the electronic device 100 to a wired/wireless network including the Internet.

The network interface 135 may include a communication module (not shown) for connection to a wired/wireless network. For example, the network interface 135 may include a communication module for a wireless LAN (WLAN) (Wi-Fi), wireless broadband (WiBro), world interoperability for microwave access (WiMax), and high speed downlink packet access (HSDPA).

The network interface 135 may transmit/receive data to/from other users or other electronic devices through a connected network or another network linked to the connected network.

The network interface 135 may receive web content or data provided by content providers or network operators. That is, the network interface 135 may receive content such as movies, advertisements, games, VOD, and broadcasting and information related thereto provided from content providers or network providers through networks.

The network interface 135 may receive firmware update information and update files provided by network operators, and may transmit data to the Internet, content providers, or network operators.

The network interface 135 may select and receive a desired application from among applications open to the public through a network.

The storage 140 may store programs for processing and controlling each signal in the controller 170 and may store processed video, audio, or data signals. For example, the storage 140 may store application programs designed for the purpose of performing various tasks that may be processed by the controller 170 and selectively provide some of the stored application programs at the request of the controller 170.

Programs stored in the storage 140 are not particularly limited as long as they can be executed by the controller 170.

The storage 140 may execute a function of temporarily storing video, voice, or data signals received from an external device through the external device interface 130.

The storage 140 may store information on a predetermined broadcast channel through a channel memory function such as a channel map.

Although FIG. 2 illustrates an embodiment in which the storage 140 is provided separately from the controller 170, the scope of the present disclosure is not limited thereto, and the storage 140 may be included in the controller 170.

The storage 140 may include at least one of a volatile memory (e.g., a DRAM, an SRAM, an SDRAM, etc.) or a non-volatile memory (e.g., a flash memory, a hard disk drive (HDD), a solid-state drive (SSD), etc.). In various embodiments of the present disclosure, "storage" and "memory" may be used interchangeably.

The user input interface 150 may transmit a signal input by a user to the controller 170 or transmit a signal from the controller 170 to the user.

For example, the user input interface 150 may transmit/receives user input signals such as power on/off, channel selection, and screen settings to/from the remote control device 200, transmit user input signals input through local keys (not shown) such as a power key, a channel key, a volume key, and a setting key to the controller 170, transmit a user input signal input through a sensor (not shown) that senses a user's gesture to the controller 170, or transmit signals from the controller 170 to the sensor.

The input part 160 may be provided on one side of the main body of the electronic device 100. For example, the input part 160 may include a touch pad, physical buttons, and the like.

The input part 160 may receive various user commands related to the operation of the electronic device 100 and transmit control signals related to the input commands to the controller 170.

The input part 160 may include at least one microphone (not shown) and may receive a user voice through the microphone.

The controller 170 may include at least one processor and may control the overall operation of the electronic device 100 using the processor included therein. Here, the processor may be a general processor such as a central processing unit (CPU). The processor may be a dedicated device such as an ASIC or another hardware-based processor.

The controller 170 may demultiplex streams input through the tuner 110, the demodulator 120, the external device interface 130, or the network interface 135, or process demultiplexed signals to generate and output signals for video or audio output.

The display 180 may convert a video signal, a data signal, an OSD signal, and a control signal processed by the controller 170 or a video signal, a data signal, and a control signal received from the external device interface 130 to generate driving signals.

The display 180 may include a display panel (not shown) having a plurality of pixels.

The plurality of pixels provided in the display panel may include RGB subpixels. Alternatively, the plurality of pixels provided in the display panel may include RGBW subpixels. The display 180 may convert a video signal, a data signal, an OSD signal, a control signal, etc. processed by the controller 170 to generate driving signals for the plurality of pixels.

The display 180 may be a plasma display panel (PDP), a liquid crystal display (LCD), an organic light emitting diode (OLED) display, or a flexible display, and may also be a 3D display. 3D displays 180 may be classified into a glasses-free type and a glasses type.

Meanwhile, the display 180 may be configured as a touch screen and used as an input device in addition to an output device.

The audio output part 185 receives the audio signal processed by the controller 170 and outputs the same as audio.

A video signal processed by the controller 170 may be input to the display 180 and displayed as an image related to the video signal. Additionally, the video signal processed by the controller 170 may be input to an external output device through the external device interface 130.

An audio signal processed by the controller 170 may be output as sound to the audio output part 185. Additionally, the audio signal processed by the controller 170 may be input to an external output device through the external device interface 130.

Although not illustrated in FIG. 2, the controller 170 may include a demultiplexer, an image processor, etc.

In addition, the controller 170 may control overall operations of the electronic device 100. For example, the controller 170 may control the tuner 110 to select (tune to) a broadcast related to a channel selected by the user or a previously stored channel.

Additionally, the controller 170 may control the electronic device 100 using a user command input through the user input interface 150 or an internal program.

Meanwhile, the controller 170 may control the display 180 to display an image. Here, the image displayed on the display 180 may be a still image or a video, and may be a 2D image or a 3D image.

Further, the controller 170 may cause a predetermined 2D object to be displayed in an image displayed on the display 180. For example, the object may be at least one of a connected web screen (newspaper, magazine, or the like), an electronic program guide (EPG), various menus, widgets, icons, a still image, a video, or text.

Meanwhile, the electronic device 100 may further include an imaging device (not shown). The imaging device may capture an image of the user. The imaging device may be implemented as a single camera, but the present disclosure is not limited thereto and the imaging device may also be implemented as a plurality of cameras. Meanwhile, the imaging device may be embedded in the electronic device 100 at the top of the display 180 or may be disposed separately. Image information captured by the imaging device may be input to the controller 170.

The controller 170 may recognize a location of the user based on images captured by the imaging device. For example, the controller 170 may ascertain the distance (z-axis coordinate) between the user and the electronic device 100. In addition, the controller 170 may ascertain the x-axis coordinate and y-axis coordinate in the display 180 related to the location of the user.

The controller 170 may detect a user's gesture based on images captured by the imaging device, each signal detected by a sensor, or a combination thereof.

The power supply 190 may supply corresponding power throughout the electronic device 100. In particular, the power supply 190 may supply power to the controller 170, which may be implemented in the form of a system on chip (SOC), the display 180 for displaying images, and the audio output part 185 for audio output.

Specifically, the power supply 190 may include a converter (not shown) that converts AC power to DC power and a DC/DC converter (not shown) that converts a DC power level.

The remote control device 200 may transmit user input to the user input interface 150. To this end, the remote control device 200 may use Bluetooth, radio frequency (RF) communication, infrared communication, ultra-wideband (UWB), ZigBee, and the like. Additionally, the remote control device 200 may receive video, audio, or data signals output from the user input interface 150 and display the same or output the same as audio through the remote control device 200.

The electronic device 100 described above may be a stationary or mobile digital broadcast receiver capable of receiving digital broadcasting.

Meanwhile, the block diagram of the electronic device 100 shown in FIG. 2 is merely a block diagram for an embodiment of the present disclosure, and components of the block diagram may be integrated, added, or omitted according to the specifications of the electronic device 100 that is actually implemented.

That is, two or more components may be combined into one component, or one component may be subdivided into two or more components as necessary. In addition, the function executed by each block is for describing an embodiment of the present disclosure, and the specific operation or device does not limit the scope of the present disclosure.

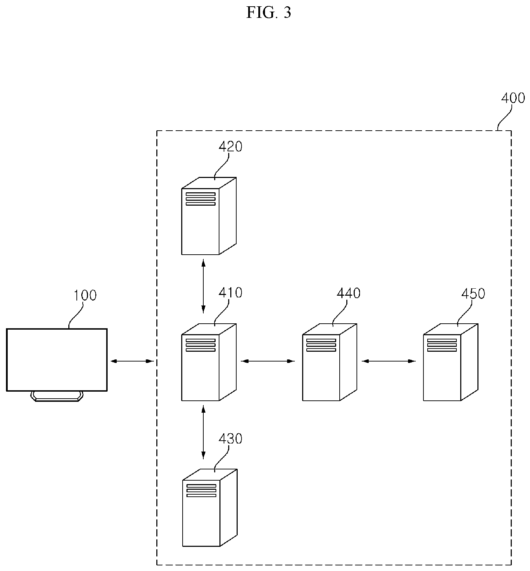

FIG. 3 is a diagram referenced in description of the server of FIG. 1.

Referring to FIG. 3, the server 400 may include a relay server 410, a speech-to-text (STT) server 420, a natural language processing (NLP) server 430, a user identification server 440, and/or an account server 450. Although the relay server 410, the STT server 420, the NLP server 430, the user identification server 440, and the account server 450 are distinguished from each other in the present disclosure, the present disclosure is not limited thereto. For example, two or more of the relay server 410, the STT server 420, the NLP server 430, the user identification server 440, and the account server 450 may be configured as one server.

The relay server 410 may communicate with the electronic device 100. The relay server 410 may transmit data between the STT server 420, the NLP server 430, the user identification server 440, and the electronic device 100. The relay server 410 may store at least some data transmitted between the STT server 420, the NLP server 430, the user identification server 440, and the electronic device 100.

The STT server 420 may receive audio data. The STT server 420 may convert the audio data into text data. The STT server 420 may transmit the text data to the electronic device 100 via the relay server 410. The STT server 420 may be called an automatic speech recognition (ASR) server.

The STT server 420 may increase the accuracy of speech-to-text conversion using a language model. A language model may refer to a model that may calculate the probability of a sentence or the probability of the next word appearing when previous words are provided. For example, the language model may include probabilistic language models such as Unigram model, Bigram model, and N-gram model. That is, the STT server 420 may determine whether text data has been appropriately converted from audio data, and accordingly, increase the accuracy of conversion to text data.

The NLP server 430 may receive text data. The NLP server 430 may perform intent analysis on the text data based on the received text data. The NLP server 430 may transmit intent analysis information indicating the result of intent analysis to the electronic device 100 via the relay server 410.

According to an embodiment, the NLP server 430 may generate intent analysis information by sequentially performing a morpheme analysis step, a syntax analysis step, a speech-act analysis step, a conversation processing step, and the like on text data. The morpheme analysis step is a step of classifying text data related to speech uttered by a user into morpheme units, which are the smallest units with meaning, and determining to what part of speech each classified morpheme corresponds. The syntax analysis step is a step of classifying text data into noun phrases, verb phrases, adjective phrases, and the like using the results of the morpheme analysis step and determining what kind of relationship is present between the classified phrases. Through the syntax analysis step, subjects, objects, and modifiers of speech uttered by a user may be determined. The speech-act analysis step is a step of analyzing the intention of speech uttered by a user using the results of the syntax analysis step. Specifically, the speech-act analysis step is a step of determining the intention of a sentence, such as whether a user is asking a question, making a request, or simply expressing an emotion. The conversation processing step is a step of determining whether to reply to user's utterance, respond thereto, or ask a question for additional information.

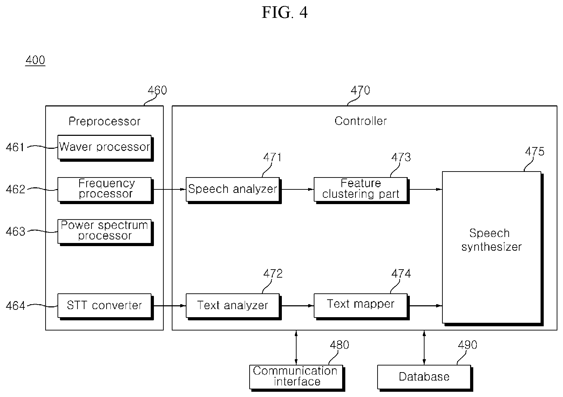

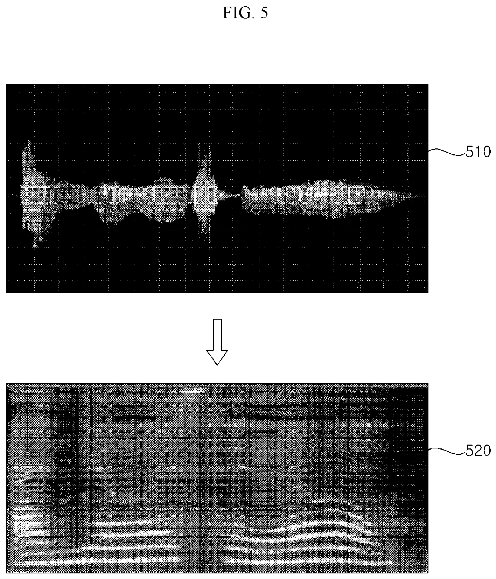

The user identification server 440 may receive audio data. The user identification server 440 may extract voice features based on the audio data. Here, the voice features may include the waveform of the voice, the frequency band of the voice, the power spectrum of the voice, and the like. Extraction of voice features will be described later with reference to FIG. 4 and FIG. 5.

The user identification server 440 may obtain a voice feature vector from the voice features. The user identification server 440 may obtain the voice feature vector from the voice features based on a linear predictive coefficient, cepstrum, Mel frequency cepstral coefficient (MFCC), and filter bank energy.

The user identification server 440 may determine a similarity between a plurality of feature vectors. The user identification server 440 may determine the similarity between the plurality of feature vectors using cosine similarity, Euclidean similarity, or the like. Although an example of calculating a similarity between a first voice input and a second voice input based on cosine similarity will be described in the present disclosure, the method of determining a similarity is not limited thereto. For example, a first vector related to first text and a second vector related to second text may be created. A cosine similarity between the first vector and the second vector may be calculated based on Formula 1 below.

[Formula 1] $$cos(\Theta) = \frac{A \cdot B}{\|A\| \, \|B\|} = \frac{\sum_{i=1}^{n} A_i \times B_i}{\sqrt{\sum_{i=1}^{n} (A_i)^2} \times \sqrt{\sum_{i=1}^{n} (B_i)^2}}$$

Here, A-B indicates the dot product of two vectors, an ‖A‖ and ‖B‖ indicate the magnitudes of the two vectors. That is, cosine similarity may be calculated by dividing the dot product of two vectors by the product of the magnitudes of the vectors. Cosine similarity may range from -1 to 1, and two vectors are determined to be similar as the cosine similarity therebetween is closer to 1.

The user identification server 440 may determine whether users who have uttered speech are the same based on the similarity between a plurality of feature vectors. For example, when a similarity between a first feature vector related to the first voice input and a second feature vector related to the second voice input is equal to or greater than a predetermined standard, the user identification server 440 may determine that the user who has uttered the first voice input and the user who has uttered the second voice input are the same.

According to an embodiment, the user identification server 440 may obtain a vector by processing a voice feature vector using an algorithm such as the Gaussian mixture model (GMM), supervector, i-vector, d-vector, x-vector, or the like. The user identification server 440 may determine whether users who have uttered voices are the same based on a similarity between a first vector obtained by processing a first feature vector and a second vector obtained by processing a second feature vector.

The user identification server 440 may store audio data. The user identification server 440 may store data on voiceprint (hereinafter, voiceprint information). Here, voiceprint information may include a voice feature vector and/or a vector obtained by processing the voice feature vector.

The user identification server 440 may store a voice database. The voice database regarding voices may include unique identification information related to the electronic device 100 (hereinafter referred to as device identification information), unique identification information related to a user account (hereinafter referred to as user identification information), voice data mapped to user identification information, voiceprint information mapped to user identification information.

The device identification information, user identification information, audio data, and voiceprint information included in the voice database may be stored in the user identification server 440 in association with one another. For example, at least one piece of device identification information, a plurality of pieces of audio data, and/or a plurality of pieces of voiceprint information may be mapped to user identification information. That is, it may be interpreted that device identification information, audio data, and voiceprint information are mapped to a user account and stored in the user identification server 440. In the present disclosure, an example in which a plurality of pieces of audio data and a plurality of pieces of voiceprint information are all mapped to user identification information included in the voice database will be described.

The user identification server 440 may update voiceprint information included in a voice database based on audio data included in the voice database. For example, the user identification server 440 may generate voiceprint information related to audio data included in the voice database using an algorithm different from a previously used algorithm. Here, the user identification server 440 may change the voiceprint information included in the voice database to the newly generated voiceprint information.

The account server 450 may manage data regarding user accounts. The account server 450 may manage user account IDs, passwords, user identification information, device identification information mapped to user accounts, and whether or not users agree to terms and conditions related to various functions.

The account server 450 may store a database regarding user accounts. The database regarding user accounts may include user account IDs, passwords, user identification information, device identification information mapped to the user accounts, registration dates and times of the user accounts, whether or not users agree to terms and conditions related to various functions, and dates and times when users agree to the terms and conditions.

The account server 450 may communicate with the electronic device 100. For example, the account server 450 may create and register a user account based on data from the electronic device 100. For example, the account server 450 may approve login of a user account based on an ID and a password received from the electronic device 100.

FIG. 4 is a block diagram for describing the configuration of the server according to an embodiment of the present disclosure.

Referring to FIG. 4, the server 400 may include a preprocessor 460, a controller 470, a communication interface 480, and/or a database 490.

The preprocessor 460 may preprocess speech received through the communication interface 480 or speech stored in the database 490.

The preprocessor 460 may be implemented as a separate chip from the controller 470 or may be implemented as a chip included in the controller 470.

The preprocessor 460 may receive a voice signal (uttered by a user) and filter noise signals from the voice signal before converting the received voice signal into text data.

If the preprocessor 460 is provided in the electronic device 100, the preprocessor 460 may recognize a startup word for activating speech recognition of the electronic device 100. The preprocessor 460 may convert the startup word received through the user input interface 150 into text data, and if the converted text data is text data related to a pre-stored startup word, determine that the startup word is recognized.

The preprocessor 460 may convert the noise-removed voice signal into a power spectrum.

A power spectrum may be a parameter that indicates a frequency component included in a temporally varying waveform of a voice signal and the magnitude of the frequency component.

A power spectrum shows a distribution of squared amplitude values according to the frequency of the waveform of a voice signal. This will be described with reference to FIG. 5.

FIG. 5 is a diagram illustrating an example of converting a voice signal into a power spectrum according to an embodiment of the present disclosure.

FIG. 5 shows a voice signal 510. The voice signal 510 may be a signal received from an external device or may be a signal previously stored in the memory 170.

The x-axis of the voice signal 510 represents time, and the y-axis represents amplitude.

A power spectrum processor 463 may convert the voice signal 510 in which the x-axis is the time axis into a power spectrum 520 in which the x-axis is the frequency axis. The power spectrum processor 463 may convert the voice signal 510 into the power spectrum 520 using Fast Fourier transform (FFT). The x-axis of the power spectrum 520 represents frequency, and the y-axis represents the square of amplitude.

Referring back to FIG. 4, the functions of the preprocessor 460 and the controller 470 described in FIG. 4 may also be performed in the NLP server 430.

The preprocessor 460 may include a wave processor 461, a frequency processor 462, the power spectrum processor 463, a speech-to-text (STT) converter 464, and the like.

The wave processor 461 may extract the waveform of speech.

The frequency processor 462 may extract the frequency band of the speech.

The power spectrum processor 463 may extract the power spectrum of the speech.

A power spectrum may be a parameter that indicates, when a temporally varying waveform is given, a frequency component included in the waveform and the magnitude of the frequency component.

The STT converter 464 may convert speech into text. The STT converter 464 may convert speech in a specific language into text in that language.

The controller 470 may control the overall operation of the server 400. The controller 470 may include a speech analyzer 471, a text analyzer 472, a feature clustering part 473, a text mapper 474, and/or a speech synthesizer 475.

The speech analyzer 471 may extract speech characteristic information using one or more of the waveform of speech, the frequency band of the speech, and the power spectrum of the speech preprocessed in the preprocessor 460. The speech characteristic information may include one or more of information on the sex of a speaker, the voice (or tone) of the speaker, the pitch of voice, the speaking style of the speaker, the speech rate of the speaker, and the emotion of the speaker. Additionally, the speech characteristic information may further include the timbre of the speaker.

The text analyzer 472 may extract main expressions from text converted by the STT converter 464. Upon detecting a change in tone between phrases from the converted text, the text analyzer 472 may extract the phrase with a different tone as a main expression phrase. The text analyzer 472 may determine that the tone has changed when the frequency band between phrases has changed more than a preset band. The text analyzer 472 may extract key words from phrases in the converted text. A key word may be a noun present in a phrase, but this is merely an example.

The feature clustering part 473 may classify the speech type of the speaker using the speech characteristic information extracted by the speech analyzer 471. The feature clustering part 473 may classify the speech type of the speaker by assigning a weight to each type item constituting the speech characteristic information. The feature clustering part 473 may classify the speech type of the speaker using an attention technique of a deep learning model.

The text mapper 474 may translate text converted into a first language into text in a second language. The text mapper 474 may map the text translated into the second language with the text in the first language. The text mapper 474 may map main expressions constituting the text in the first language to corresponding phrases in the second language. The text mapper 474 may map a speech type related to the main expressions constituting the text in the first language to phrases in the second language. This is for the purpose of applying the classified speech type to the phrases in the second language.

The speech synthesizer 475 may apply the speech type and speaker's tone classified by the feature clustering part 473 to the main expressions of the text translated into the second language in the text mapper 474 to generate synthetic speech.

The controller 470 may determine the speech characteristics of the user using one or more of the transmitted text data or the power spectrum 520.

Speech characteristics of a user may include the sex, pitch, tone, speech topic, speech rate, and voice volume of the user.

The controller 470 may obtain the frequency of the voice signal 510 and the amplitude corresponding to the frequency.

The controller 470 may determine the sex of the user who has uttered the voice using the frequency band of the power spectrum 470. For example, if the frequency band of the power spectrum 520 is within a preset first frequency band range, the controller 470 may determine that the user is male.

If the frequency band of the power spectrum 520 is within a preset second frequency band range, the controller 470 may determine that the user is female. Here, the second frequency band range may be higher than the first frequency band range.

The controller 470 may determine the pitch of voice using the frequency band of the power spectrum 520. For example, the controller 470 may determine the pitch of the voice based on the amplitude within a specific frequency band.

The controller 470 may determine the user's tone using the frequency band of the power spectrum 520. For example, the controller 470 may determine a frequency band with an amplitude equal to or greater than a certain level among the frequency bands of the power spectrum 520 as a main sound range of the user and determine this main sound range as the user's tone.

The controller 470 may determine the user's speech rate based on the number of syllables uttered per unit time from the converted text data.

The controller 470 may determine the topic of the user's speech using the Bag-Of-Word Model technique for the converted text data.

The Bag-Of-Word Model technique is a technique of extracting frequently used words based on the frequency of a word in a sentence. Specifically, the Bag-Of-Word Model technique is a technique of extracting unique words within a sentence and expressing the frequency of each extracted word as a vector to determine the features of the topic of speech. For example, if words such as "running" and "physical strength" appear frequently in text data, the controller 470 may classify the topic of the user's speech as exercise.

The controller 470 may determine the topic of the user's speech from the text data using a known text categorization technique. The controller 470 may extract keywords from the text data and determine the topic of the user's speech.

The controller 470 may determine the user's voice volume by considering amplitude information in the entire frequency band. For example, the controller 470 may determine the user's voice volume based on the average or weighted average of amplitudes in each frequency band of the power spectrum 470.

The communication interface 480 may communicate with an external server by wire or wirelessly. The communication interface 480 may communicate with the electronic device 100 by wire or wirelessly.

The database 490 may store speech in first language included in content. The database 490 may store synthetic speech in which speech in the first language has been converted into speech in the second language. The database 490 may store first text related to speech in the first language and second text in which the first text has been translated into the second language. The database 490 may store various learning models required for speech recognition.

Meanwhile, the controller 170 of the electronic device 100 illustrated in FIG. 2 may include the preprocessor 460 and the controller 470 illustrated in FIG. 4. That is, the controller 170 of the electronic device 100 may perform the functions of the preprocessor 460 and the controller 470.

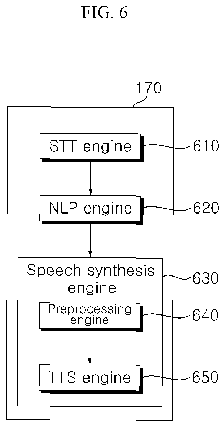

FIG. 6 is a block diagram illustrating a configuration of a controller for speech recognition and synthesis of an image display device according to an embodiment of the present disclosure.

That is, the speech recognition and synthesis process illustrated in FIG. 6 may be performed by the controller 170 of the electronic device 100 without using the server.

Referring to FIG. 6, the processor 170 of the electronic device 100 may include an STT engine 610, an NLP engine 620, and a speech synthesis engine 630. Each engine may be either hardware or software.

The STT engine 610 may perform the function of the STT server 420 of FIG. 5. That is, the STT engine 610 may convert audio data into text data.

The NLP engine 620 may perform the function of the NLP server 430 shown in FIG. 5. That is, the NLP engine 620 may obtain intent analysis information indicating the speaker's intention from the converted text data.

The speech synthesis engine 630 may perform a function of a speech synthesis server. The speech synthesis engine 630 may search a database for syllables or words related to given text data and synthesize a combination of the searched syllables or words to generate synthetic speech.

The speech synthesis engine 630 may include a preprocessing engine 631 and a TTS engine 632.

The preprocessing engine 631 may preprocess text data before generating synthetic speech. Specifically, the preprocessing engine 631 performs tokenization to divide text data into tokens, which are meaningful units. After performing tokenization, the preprocessing engine 631 may perform a cleansing operation to remove unnecessary characters and symbols to eliminate noise. Thereafter, the preprocessing engine 631 may generate the same word token by integrating word tokens with different expression methods. Thereafter, the preprocessing engine 631 may remove meaningless word tokens (stopwords).

The TTS engine 632 may synthesize speech related to the preprocessed text data and generate synthetic speech.

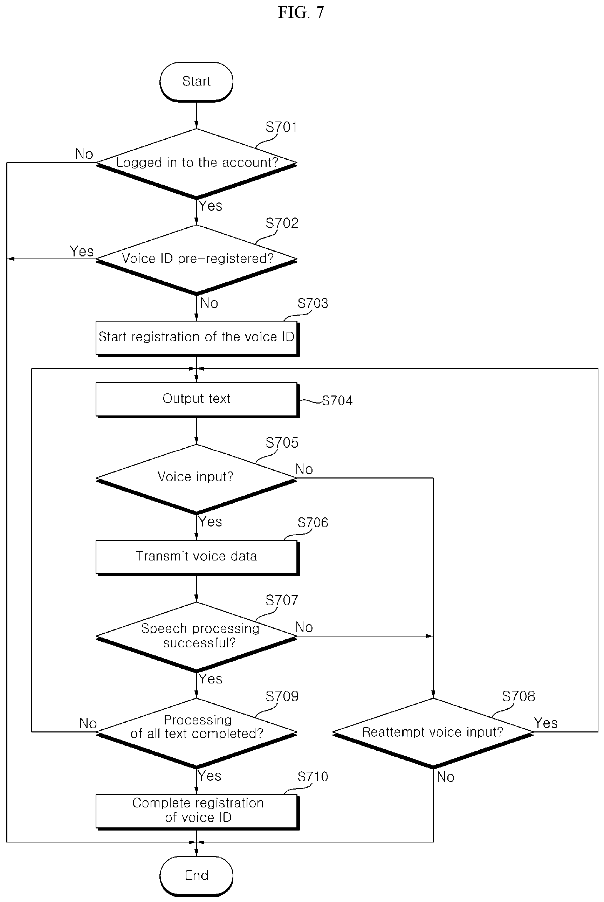

FIG. 7 is a flowchart of a method of operating an electronic device according to an embodiment of the present disclosure.

Referring to FIG. 7, the electronic device 100 may determine whether a user account is logged in to the server 400 in operation S701. For example, a user may log in to the server 400 with a user account by entering the user account ID and password.

According to an embodiment, when the user first logs in to the server 400 using the electronic device 100 with the user account, the electronic device 100 may include user identification information related to the user account in a user list. For example, in a case where three different user accounts log in to the server 400 using the electronic device 100, the user list stored in the electronic device 100 may include three different pieces of user identification information.

In operation S702, the electronic device 100 may determine whether voice-related identification information (hereinafter referred to as voice ID) is registered with respect to the user account logged in to the server 400. Here, the voice ID may include voiceprint information stored in the user identification server 440. For example, the server 400 may transmit information on whether a voice ID has been registered with respect to the user account logged in to the server 400 to the electronic device 100.

According to an embodiment, the server 400 may determine whether the voice ID has been registered based on whether voiceprint information has been mapped to user identification information, which is unique identification information related to the user account logged in to the server 400. Here, when the voice ID has not been registered with respect to the user account, the number of pieces of voiceprint information mapped to the user identification information may be 0.

According to an embodiment, the server 400 may determine that the voice ID has been registered if the number of pieces of voiceprint information mapped to the user identification information is two or more predetermined numbers and determine that the voice ID has not been registered if the number of pieces of voiceprint information is less than the predetermined numbers. For example, in the case of a user account for which a voice ID has been registered, six different pieces of voiceprint information may be mapped to user identification information. For example, in the case of a user account for which a voice ID has not been registered, five or fewer voiceprint information may be mapped to user identification information.

According to an embodiment, a flag value indicating whether a voice ID has been registered may be mapped to user identification information stored in the server 400. Here, user identification information to which a flag value is mapped may be stored in the user identification server 440 and/or the account server 450. The server 400 may determine whether the voice ID has been registered based on the flag value mapped to the user identification information. For example, a flag value mapped to user identification information may be 0 in the case of a user account for which a voice ID has not been registered, and a flag value mapped to user identification information may be 1 in the case of a user account for which a voice ID has been registered.

When the voice ID has not been registered with respect to the user account, the electronic device 100 may start a process of registering the voice ID in operation S703. For example, when starting the process of registering the voice ID, the electronic device 100 may transmit data containing the device identification information, the user identification information, a value indicating the start of registration of the voice ID, etc. to the server 400.

The electronic device 100 may output preset text in operation S704. The electronic device 100 may output any one of a plurality of pieces of preset text. For example, when the electronic device 100 is the image display device 100a, the electronic device 100 may output preset text through the display 180.

According to an embodiment, the server 400 may transmit any one of a plurality of pieces of preset text to the electronic device 100 in a preset order. Here, the electronic device 100 may output the preset text received from the server 400.

The electronic device 100 may determine whether speech with respect to the preset text is input in operation S705. For example, the electronic device 100 may determine whether speech is input through a microphone included in the input part 160 within a preset time. Here, the voice signal related to the speech input through the microphone may be transmitted to the controller 170 through the user input interface 150. For example, the electronic device 100 may determine whether data containing a voice signal related to speech uttered by the user is received from the remote control device 200 within a preset time.

When speech with respect to the preset text is input, the electronic device 100 may transmit audio data including the voice signal related to the speech to the server 400 in operation S706. Here, the electronic device 100 may transmit the device identification information, the user identification information, and a language code indicating the type of language to the server 400 along with the audio data.

The server 400 may convert the voice signal included in the audio data received from the electronic device 100 into text. The server 400 may determine whether the text converted from the voice signal and the preset text correspond to each other. For example, the server 400 may determine whether the text converted from the voice signal and the preset text correspond to each other based on the similarity therebetween.

The server 400 may generate voiceprint information related to the voice signal when the text converted from the voice signal and the preset text correspond to each other. The server 400 may map the voiceprint information generated with respect to the preset text to the user identification information and store the same. The server 400 may map the audio data received with respect to the preset text to the user identification information and store the same.

The electronic device 100 may determine whether speech processing for the preset text is successful based on the response received from the server 400 in operation S707. For example, if the text converted from the voice signal and the preset text correspond to each other, the server 400 may notify the electronic device 100 of success of speech processing. For example, when the voiceprint information related to the voice signal has been generated, the server 400 may notify the electronic device 100 of success of speech processing.

Meanwhile, in operation S708, the electronic device 100 may determine whether the user reattempts to input speech when speech with respect to the preset text is not input or when speech processing for the preset text fails. For example, the electronic device 100 may reattempt to input speech based on a user input from the user reattempting to input speech. Here, the electronic device 100 may output the preset text again.

In operation S709, if speech processing for the preset text is successful, the electronic device 100 may determine whether processing for all pieces of text is completed. For example, if all speech processing for six pieces of text is successful, processing for all pieces of text may be completed. Meanwhile, when processing for five pieces of preset text is completed, the electronic device 100 may output the last preset text.

The electronic device 100 may end the process of registering the voice ID when processing for all pieces of text is completed in operation S710. For example, when the electronic device 100 is the image display device 100a, the electronic device 100 may output a screen indicating completion of voice ID registration through the display 180. For example, the electronic device 100 may transmit data indicating completion of voice ID registration to the account server 450.

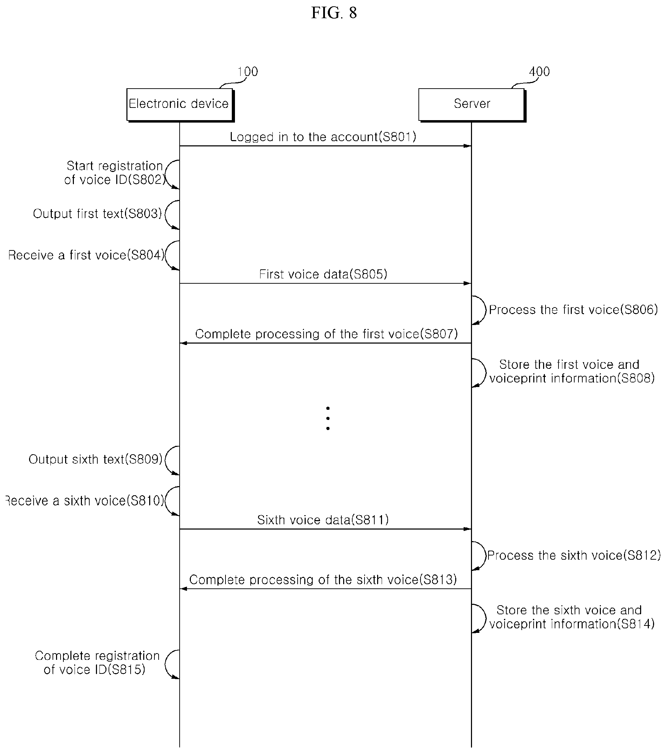

FIG. 8 is a flowchart of a method of operating a system according to an embodiment of the present disclosure.

Referring to FIG. 8, the electronic device 100 may log in to the server 400 using a user account in operation S801.

The electronic device 100 may start a process of registering a voice ID in operation S802.

The electronic device 100 may output first text among a plurality of pieces of preset text in operation S803.

The electronic device 100 may receive first speech for the first text in operation S804.

The electronic device 100 may transmit first audio data including a speech signal related to the first speech to the server 400 in operation S805.

The server 400 may process the first speech for the first text based on the first audio data received from the electronic device 100 in operation S806. The server 400 may convert the speech signal related to the first speech included in the first audio data received from the electronic device 100 into text. The server 400 may determine whether the text converted from the speech signal related to the first speech and the first text correspond to each other.

The server 400 may notify the electronic device 100 of completion of processing for the first speech in operation S807. For example, the server 400 may notify the electronic device 100 of success of processing for the first speech based on the fact that the text converted from the speech signal related to the first speech corresponds to the first text.

Further, the server 400 may generate first voiceprint information with respect to the first speech based on the speech signal related to the first speech based on the fact that the text converted from the speech signal related to the first speech corresponds to the first text.

The server 400 may store the first audio data and the first voiceprint information with respect to the first speech in operation S808. The server 400 may map the first audio data and first voiceprint information to the user identification information related to the logged-in user account and store the same.

The electronic device 100 may output the second to fifth pieces of text in stages. The electronic device 100 may sequentially receive second to fifth speeches related to the second to fifth pieces of text. The electronic device 100 may sequentially transmit second to fifth pieces of audio data related to the second to fifth speeches to the server 400.

The server 400 may process the second to fifth speeches based on the second to fifth pieces of audio data received from the electronic device 100. Additionally, the server 400 may sequentially generate and store second to fifth pieces of speech information related to the second to fifth speeches.

The electronic device 100 may output sixth text from among a plurality of pieces of preset text in operation S809.

The electronic device 100 may receive sixth speech with respect to the sixth text in operation S810.

The electronic device 100 may transmit sixth audio data including a speech signal related to the sixth speech to the server 400 in operation S811.

The server 400 may process the sixth speech with respect to the sixth text based on the sixth audio data received from the electronic device 100 in operation S812. The server 400 may convert a speech signal related to the sixth speech included in the sixth audio data received from the electronic device 100 into text. The server 400 may determine whether the text converted from the speech signal related to the sixth speech and the sixth text correspond to each other.

The server 400 may notify the electronic device 100 of completion of processing for the sixth speech in operation S813.

Meanwhile, when the text converted from the speech signal related to the sixth speech and the sixth text correspond to each other, the server 400 may generate sixth voiceprint information regarding the sixth speech based on the speech signal related to the sixth speech.

The server 400 may store the sixth audio data and the sixth voiceprint information regarding the sixth speech in operation S814. The server 400 may map the sixth audio data and the sixth voiceprint information to the user identification information related to the logged-in user account and store the same. Here, six different pieces of audio data and a plurality of pieces of voiceprint information may be mapped to the user identification information related to the logged-in user account.

The electronic device 100 may end the process of registering the voice ID in operation S815. For example, the electronic device 100 may end the process of registering the voice ID based on completion of processing for the six different pieces of preset text.

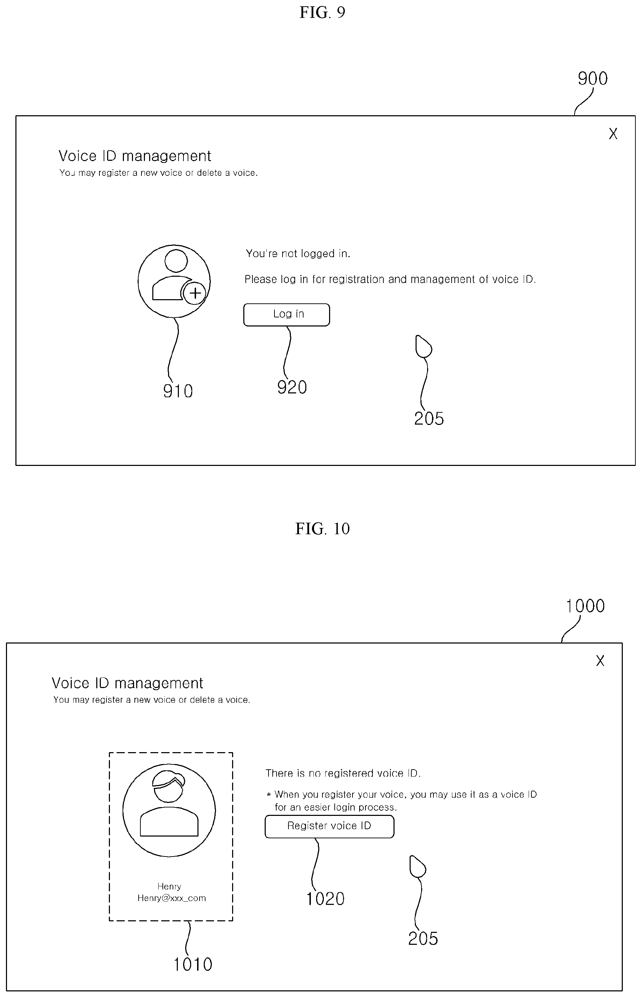

Referring to FIG. 9, if the user account is not logged in to the server 400, the electronic device 100 may output a login screen 900 related to logging in to the server 400 through the display 180. The login screen 900 may include an object 910 indicating a non-login state, and a login object 920 for executing login. When the user selects the login object 920 using a pointer 205 related to the remote control device 200, the electronic device 100 may output a screen for entering an ID and a password. Here, the user may log in to the server 400 with the user account by entering the ID and the password of the user account.

Referring to FIG. 10, when the voice ID has not been registered in the user account logged in to the server 400, the electronic device 100 may output a first account screen 1000 related to the user account for which the voice ID has not been registered. The first account screen 1000 may include an object 1010 indicating a logged-in user account, and an object 1020 regarding voice ID registration. When the user selects the object 1020 regarding voice ID registration using the pointer 205, the electronic device 100 may start the process of registering a voice ID.

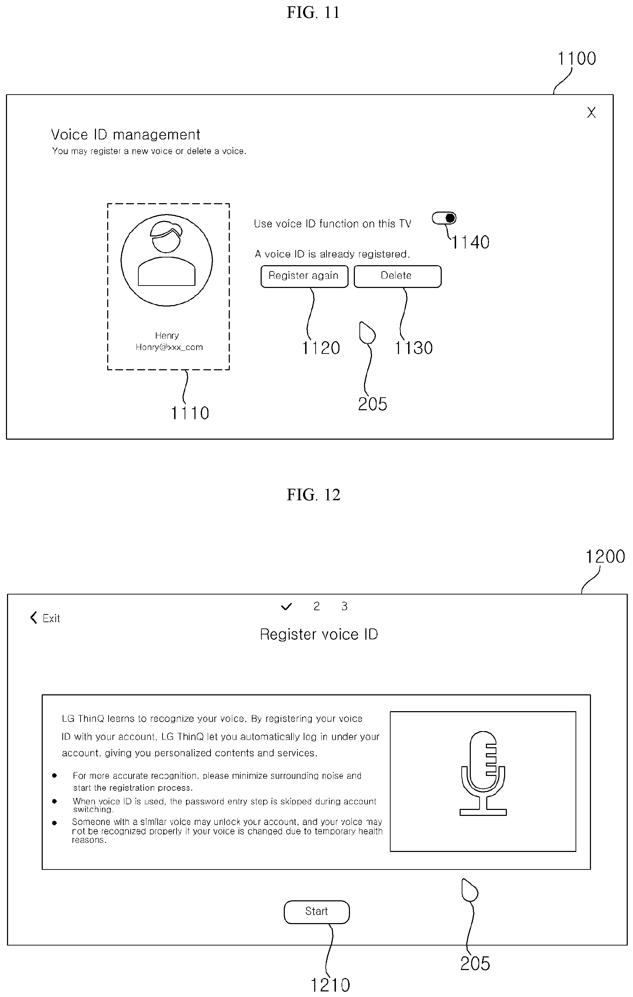

Referring to FIG. 11, when a voice ID has been registered in a user account logged in to the server 400, the electronic device 100 may display a second account screen 1100 related to the user account for which the voice ID has been registered. The second account screen 1100 may include an object 1110 indicating a logged-in user account, a re-registration object 1120 regarding voice ID re-registration, a deletion object 1130 regarding voice ID deletion, and an activation object 1140 regarding the use of a function related to voice ID. The user may select the activation object 1140 using the pointer 205 to activate or deactivate the use of a function related to voice ID.

Referring to FIG. 12, when the object 1020 regarding voice ID registration is selected on the first account screen 1000, or when the re-registration object 1120 is selected on the second account screen 1100, the electronic device 100 may output a start screen 1200 for starting voice ID registration. When the user selects a start object 1210 using the pointer 205, the electronic device 100 may output a text screen for displaying preset text.

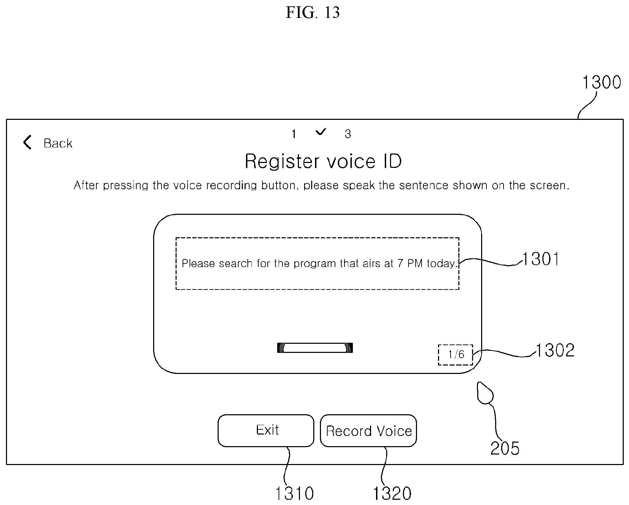

Referring to FIG. 13, the electronic device 100 may output a text screen 1300 for displaying any one of a plurality of pieces of preset text. The text screen 1300 may include preset text 1301, a text sequence number 1302, an end object 1310 for ending the process of registering a voice ID, and an input object 1320 for receiving speech.

When the user selects the end object 1310 using the pointer 205, the process of registering a voice ID may end. For example, when the process of registering a voice ID ends, all data stored in the server 400 while the process of registering a voice ID is in progress may be deleted.

When the user selects the input object 1320 using the pointer 205, the electronic device 100 may receive speech with respect to text.

According to an embodiment, when the user presses a predetermined button (e.g., a voice input button) included in the remote control device 200 while the text screen 1300 is displayed, the electronic device 100 may receive speech with respect to text based on the user input of pressing the predetermined button, received from the remote control device 200.

Meanwhile, according to an embodiment, when the user presses a predetermined button (e.g., the voice input button) included in the remote control device 200 while the process of registering a voice ID is in progress, the electronic device 100 may stop the process of registering a voice ID based on the user input of pressing the predetermined button, received from the remote control device 200. Here, the user input of pressing a predetermined button (e.g., the voice input button) included in the remote control device 200 may correspond to a user input of starting speech recognition for speech received through the remote control device 200. The electronic device 100 may perform an operation related to speech recognition on audio data including a speech signal received from the remote control device 200.

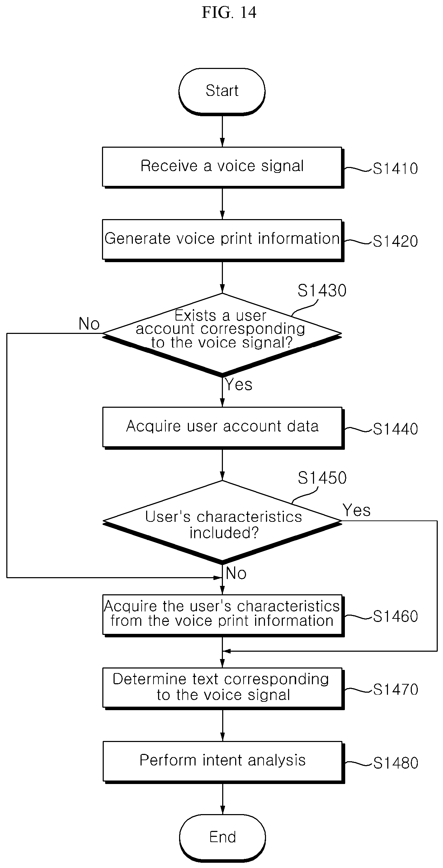

FIG. 14 is a flowchart of a method of operating a server according to an embodiment of the present disclosure.

Referring to FIG. 14, in the S1410 step, the server 400 may receive data including a voice signal from the electronic device 100.

The electronic device 100 may receive a voice input corresponding to speech uttered by the user. For example, the electronic device 100 may receive a voice signal corresponding to the voice input from the remote control devices 200. For example, the electronic device 100 may receive a voice signal corresponding to the voice input through a microphone included in the input part 160.

The electronic device 100 may transmit voice data including the voice signal to the server 400 in response to receiving the voice input. For example, the electronic device 100 may transmit speech data containing voice signals in preset units, such as syllables or words, to the server 400. In other words, if the user utters a sentence, the electronic device 100 may transmit voice signals in preset units to the server 400 while the voice input corresponding to the sentence or phrase is being received from the remote control device 200.

In the S1420 step, the server 400 may generate voiceprint information for the speech uttered by the user based on the voice data received from the electronic device 100.

In the S1430 step, the server 400 may determine whether a user account corresponding to the speech uttered by the user is found. For example, the server 400 may determine whether voiceprint information corresponding to the generated voiceprint information is stored in the database 490 by comparing the generated voiceprint information with voiceprint information stored in the database 490. At this time, when the voiceprint information corresponding to the generated voiceprint information is stored in the database 490, the server 400 may determine a user account corresponding to the voiceprint information as the user account corresponding to the voice uttered by the user.

According to one embodiment, the electronic device 100 may transmit device identification information, a user list, and a language code indicating the type of language to the server 400 along with the voice data. The server 400 may search the database 490 for voiceprint information (hereinafter referred to as candidate voiceprint information) corresponding to the user identification information included in the user list received from the electronic device 100. The server 400 may determine whether the candidate voiceprint information matches the generated voiceprint information. Among the candidate voiceprint information, the server 400 may determine the user identification information mapped to the candidate voiceprint corresponding to the generated voiceprint as the user identification information corresponding to the voice data input to the electronic device 100. Meanwhile, if no candidate voiceprint information corresponding to the generated voiceprint is found, the server 400 may determine that there is no user identification information corresponding to the voice data input to the electronic device 100.

In the S1440 step, if the user account corresponding to the speech uttered by the user is found, the server 400 may acquire data related to the user account (in what follows, account data) corresponding to the speech uttered by the user. The account data may be stored in the database 490. For example, the account data stored in the database 490 may include the ID of the user account, password, user identification information, device identification information mapped to the user account, the gender of the user, the age of the user, a history of searching for contents by the user, a history of viewing contents, a history of running applications, a history of providing voice inputs, and the content genres preferred by the user.

In the S1450 step, the server 400 may determine whether the acquired account data includes one or more user characteristics. For example, user characteristics may include the user's age, gender, region, country, and so forth. If user characteristics are included in the acquired account data, the server 400 may acquire the user characteristics from the acquired account data.

In the S1460 step, the server 400 may acquire user characteristics from the generated voiceprint information. Based on the waveform of the voice, frequency band of the voice, power spectrum of the voice, and the like corresponding to the voiceprint information generated in the S1420 step, the server 400 may determine the gender, age, and other attributes corresponding to the speech uttered by the user. For example, if no user account corresponding to the speech uttered by the user exists, the server 400 may acquire user characteristics from the generated voiceprint information. For example, if the account data corresponding to the speech uttered by the user does not include user characteristics, the server 400 may extract the user characteristics from the generated voiceprint information.

The server 400 may acquire user characteristics based on the features of the voice corresponding to the generated voiceprint information. According to one embodiment, the server 400 may use a learning model trained through machine learning and stored in the database 490 to acquire user characteristics from the generated voiceprint information. Machine learning may refer to a method where a computer learns from data without being explicitly programmed with logic by a human and uses the learned knowledge to solve problems. Deep learning is an artificial intelligence technique that teaches the computer to mimic human thinking using artificial neural networks (ANNs), enabling the computer to learn autonomously like a human. The artificial neural network may be implemented in the form of software or hardware such as a chip. For example, the ANN may include various algorithms such as a Deep Neural Network (DNN), Convolutional Neural Network (CNN), Recurrent Neural Network (RNN), and Deep Belief Network (DBN).

In the S1470 step, the server 400 may determine a text (hereinafter referred to as "spoken text") corresponding to the speech uttered by the user, based on the user characteristics.

The database 490 of the server 400 may store histories of text used according to user characteristics, based on usage histories received from a plurality of electronic devices 100. Here, the usage history may include a history of the user searching for specific text, a history of the user viewing contents corresponding to specific text, a history of the user selecting specific text corresponding to an uttered speech, etc. For example, the server 400 may structure the usage histories received from a plurality of electronic devices 100 into a database according to the user characteristics, such as gender or age group.

The server 400 may generate a set of candidate texts (hereinafter referred to as "candidate texts") corresponding to the voice signal received from the electronic device 100. For example, the server 400 may generate a plurality of candidate texts based on the waveform of syllables included in the voice signal, the relationships among words, and the probability of a subsequent word given a previous word. At this time, the server 400 may generate a predetermined number (e.g., three) of candidate texts in order of rank according to the n-best method.

The server 400 may determine the spoken text based on the usage history of each of the plurality of candidate texts related to the user characteristics, from among the usage histories of texts according to the respective characteristics stored in the database 490. For example, the server 400 may determine the priority of each of a plurality of candidate texts by considering the frequency of using each of a plurality of candidate texts according to the user's age group or the frequency of using each of a plurality of candidate texts according to the user's gender. At this time, the server 400 may determine the candidate text with the highest priority among the plurality of candidate texts as the spoken text.

The server 400 may determine the spoken text based on the history included in the acquired account data when the acquired account data includes a history indicating that at least one of a plurality of candidate texts has been used. If the acquired account data does not include any history indicating the use of at least one of the plurality of candidate texts, the server 400 may determine the spoken text based on the usage history of each of the plurality of candidate texts related to the user characteristics among the usage histories of texts according to the user characteristics stored in the database 490. If the database 490 does not include any usage history of each of the plurality of candidate texts, the server 400 may determine the spoken text as the one with the highest rank among the candidate texts generated according to the n-best method.

In the S1480 step, the server 400 may perform intent analysis on the spoken text. For example, the server 400 may acquire keywords included in the spoken text, the grammatical structure of the keywords, the intent of the sentence, and commands corresponding to the spoken text. The server 400 may transmit the result of performing the intent analysis on the spoken text to the electronic device 100.

According to one embodiment, the server 400 may generate the result of performing the intent analysis on the spoken text based on the type of the spoken text. Here, the type of the spoken text may include a genre, service, function, or application corresponding to a keyword included in the spoken text. In the present disclosure, the genre is described as an example of the type of spoken text, but the present disclosure is not limited to the specific example.

The database 490 of the server 400 may store a history describing how the types of texts are used according to the user characteristics, based on the usage histories received from a plurality of electronic devices 100. The server 400 may generate a result of performing intent analysis on the spoken text based on the history of how the type of spoken text is used according to the user characteristics, among the usage histories of the types of texts according to the user characteristics stored in the database 490. For example, the server 400 may determine the priority order of a plurality of types of spoken texts by considering the frequencies of types of spoken texts being used according to the user's gender. At this time, the server 400 may generate the result of performing intent analysis on the spoken text based on the type with the highest priority among a plurality of types.

The server 400 may generate a result of performing intent analysis on the spoken text based on the acquired account data. For example, the server 400 may generate an intent analysis result for the spoken text based on the user's preferred genre included in the acquired account data. If the acquired account data includes a history indicating the use of the type of spoken text, the server 400 may generate an intent analysis result for the spoken text based on the usage history. On the other hand, if the acquired account data does not include any information on the user's preferred genre or history of using the type of spoken text, the server 400 may generate an intent analysis result for the spoken text based on the usage history of the type of spoken text according to the user characteristics, among the usage histories of types of spoken texts according to the user characteristics, stored in the database 490.

According to one embodiment, the server 400 may transmit data related to the candidate text to the electronic device 100. For example, the server 400 may transmit the data related to the candidate text along with the intent analysis result for the spoken text.

The electronic device 100 may provide the candidate texts received from the server 400 to the user. For example, the electronic device 100 may output objects corresponding to the candidate texts through the display 180. At this time, when the user selects any one of the candidate texts, the electronic device 100 may request the server 400 to perform intent analysis for the selected candidate text. The server 400 may transmit the result of performing intent analysis for the candidate text selected by the user and received from the electronic device 100 to the electronic device 100.

According to one embodiment, the server 400 may transmit data related to the type of spoken text to the electronic device 100. For example, the server 400 may transmit the data related to the type of spoken text to the electronic device 100 along with the result of intent analysis performed for the spoken text.

The electronic device 100 may provide the type of spoken text received from the server 400 to the user. For example, the electronic device 100 may output an object corresponding to the type of spoken text through the display 180. At this time, when the user selects any one of the types of spoken text, the electronic device 100 may request the server 400 to perform intent analysis for the spoken text related to the selected type. The server 400 may transmit to the electronic device 100 the result of intent analysis for the spoken text according to the type selected by the user and received from the electronic device 100.

Meanwhile, at least a portion of the operations of the server 400 described with reference to FIG. 14 may also be performed in the electronic device 100.

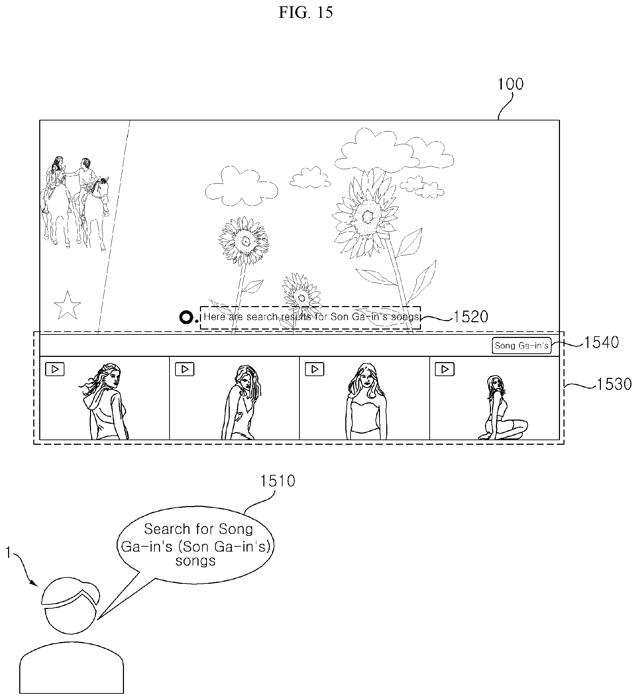

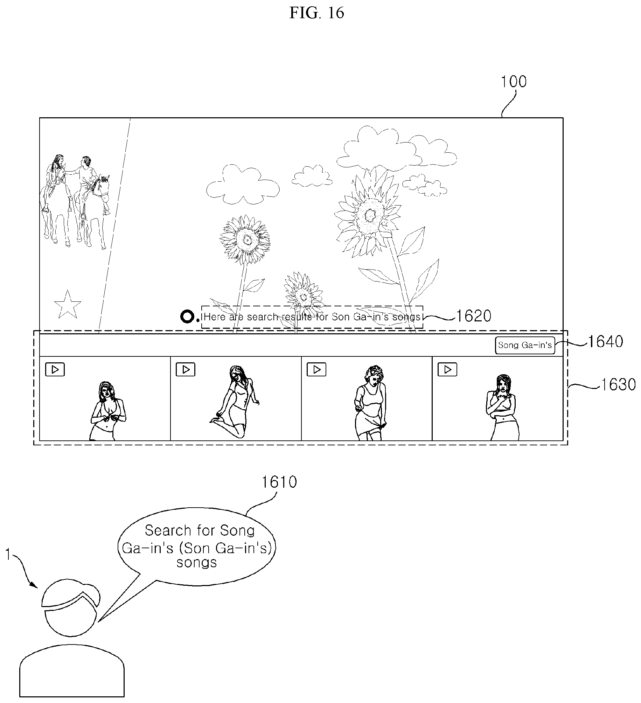

Referring to FIGS. 15 and 16, the user 1 may utter voice inputs 1510 and 1610 to search for a specific person. The electronic device 100 may transmit voice data including a voice signal corresponding to the voice inputs 1510 and 1610 uttered by the user 1 to the server 400.

The server 400 may generate a plurality of candidate texts corresponding to the voice inputs 1510 and 1610 uttered by the user 1. For example, the server 400 may generate "Search for Song Ga-in's songs," "Search for Son Ga-in's songs," and "Search for Song Ah-in's songs" as the candidate texts.

The server 400 may determine one of a plurality of candidate texts as the spoken text based on the usage history of the plurality of candidate texts included in the account data of the user 1. For example, the server 400 may check whether the usage histories of "Song Ga-in," "Son Ga-in," and "Song Ah-in" are included in the account data of the user 1. At this time, the server 400 may determine, as the spoken text, one of "Song Ga-in," "Son Ga-in," and "Song Ah-in" that has been used most frequently.

The server 400 may determine one of a plurality of candidate texts as the spoken text based on the usage history of each of the plurality of candidate texts with respect to the user characteristics stored in the database 490. For example, if the user 1 is a male in his 30s, the server 400 may check the usage histories of "Song Ga-in," "Son Ga-in," and "Song Ah-in" by male users in their 30s from the database 490. At this time, the server 400 may determine, as the spoken text, one of "Song Ga-in," "Son Ga-in," and "Song Ah-in" that has been used most frequently.

Referring to FIG. 15, the electronic device 100 may output text 1520 corresponding to the voice input 1510 uttered by the user 1. For example, the electronic device 100 may output the text 1520 corresponding to the voice input 1510 uttered by the user 1 based on the result of intent analysis performed for the spoken text received from the server 400.

The electronic device 100 may provide a search result 1530 for songs of "Son Ga-in" based on the result of intent analysis performed for the spoken text received from the server 400. For example, if the highest use frequency among the candidate texts in the account data of the user 1 is associated with "Son Ga-in," the server 400 may transmit to the electronic device 100 the result of intent analysis performed for "Search for Son Ga-in's songs." For example, if the user 1 is a male in his 30s, and among male users in their 30s, the usage ratio is 60% for "Son Ga-in," 38% for "Song Ga-in," and 2% for "Song Ah-in," the server 400 may transmit to the electronic device 100 the result of intent analysis performed for "Search for Son Ga-in's songs."

The electronic device 100 may output an object 1540 corresponding to "Song Ga-in" based on the data related to the candidate text received from the server 400. At this time, when the user selects the object 1540 corresponding to "Song Ga-in," the electronic device 100 may request the server 400 to perform intent analysis for "Search for Song Ga-in's songs."

Referring to FIG. 16, the electronic device 100 may output text 1620 corresponding to the voice input 1610 uttered by the user 1. For example, the electronic device 100 may output the text 1620 corresponding to the voice input 1610 uttered by the user 1 based on the result of intent analysis performed for the spoken text received from the server 400.

The electronic device 100 may provide a search result 1630 for songs of "Song Ga-in" based on the result of intent analysis performed for the spoken text received from the server 400. For example, if the highest use frequency among the candidate texts in the account data of user 1 is associated with "Song Ga-in," the server 400 may transmit to the electronic device 100 the result of intent analysis performed for "Search for Song Ga-in's songs." For example, if user 1 is a male in his 60s, and among male users in their 60s, the usage ratio is 20% for "Son Ga-in," 78% for "Song Ga-in," and 2% for "Song Ah-in," the server 400 may transmit to the electronic device 100 the result of intent analysis performed for "Search for Song Ga-in's songs."

The electronic device 100 may output an object 1640 corresponding to "Son Ga-in" based on the candidate text data received from the server 400. At this time, when the user selects the object 1640 corresponding to "Son Ga-in," the electronic device 100 may request the server 400 to perform intent analysis for "Search for Son Ga-in's songs."

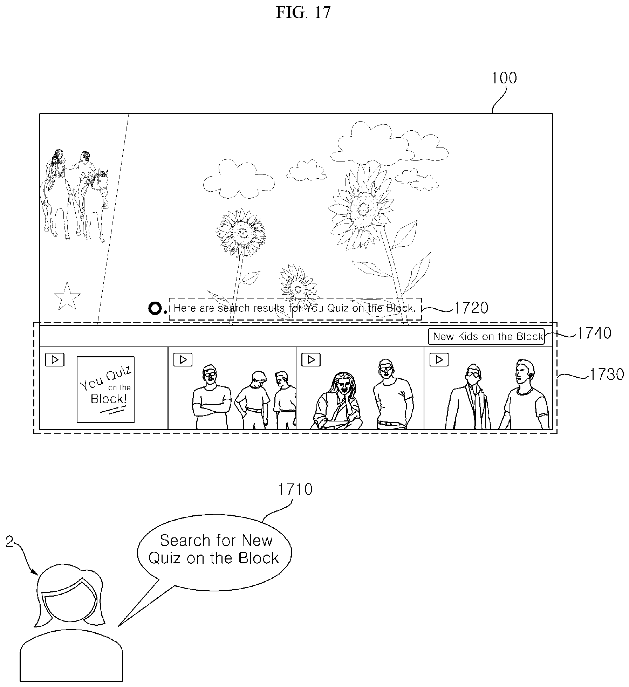

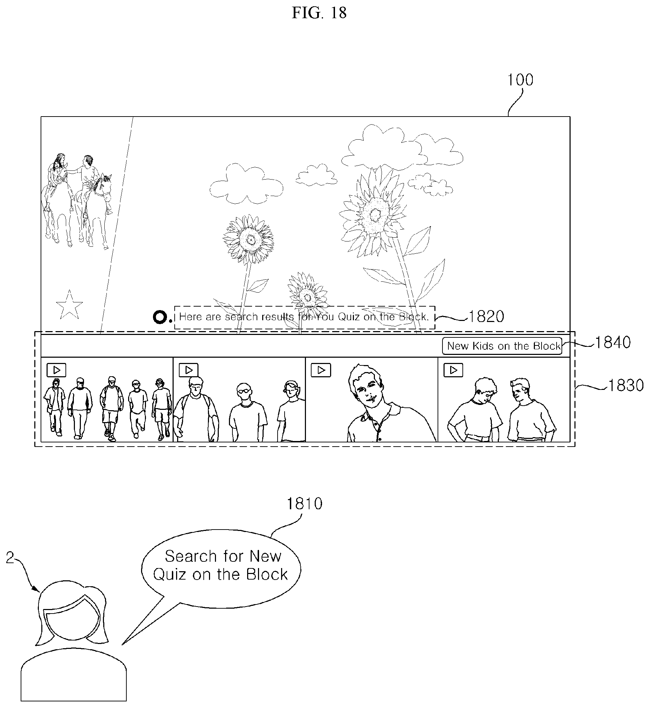

Referring to FIGS. 17 and 18, the user 2 may utter "New Quiz on the Block" 1710 and 1810. The electronic device 100 may transmit voice data including a voice signal corresponding to the voice inputs 1710 and 1810 uttered by the user 2 to the server 400.

The server 400 may generate a plurality of candidate texts corresponding to the voice input "New Quiz on the Block" 1710 and 1810 uttered by the user 2. For example, the server 400 may generate "Search for New Quiz on the Block," "Search for New Kids on the Block," and "Search for You Quiz on the Block" as the candidate texts.

The server 400 may determine one of a plurality of candidate texts as the spoken text based on the usage history of the plurality of candidate texts included in the account data of the user 2. For example, the server 400 may check whether the usage histories of "New Quiz on the Block," "New Kids on the Block," and "You Quiz on the Block" are included in the account data of the user 2. At this time, the server 400 may determine, as the spoken text, one of "New Quiz on the Block," "New Kids on the Block," and "You Quiz on the Block" that has been used most frequently.

The server 400 may determine one of a plurality of candidate texts as the spoken text based on the usage history of each of the plurality of candidate texts with respect to the user characteristics stored in the database 490. For example, if the user 2 is a female in her 40s, the server 400 may check the usage histories of "New Quiz on the Block," "New Kids on the Block," and "You Quiz on the Block" by female users in their 40s from the database 490. At this time, the server 400 may determine, as the spoken text, one of "New Quiz on the Block," "New Kids on the Block," and "You Quiz on the Block" that has been used most frequently.

Referring to FIG. 17, the electronic device 100 may output text 1720 corresponding to the voice input 1710 uttered by the user 2. For example, the electronic device 100 may output the text 1720 corresponding to the voice input 1710 uttered by the user 2 based on the result of intent analysis performed for the spoken text received from the server 400.

The electronic device 100 may provide a search result 1730 for "You Quiz on the Block" based on the result of intent analysis performed for the spoken text received from the server 400. For example, if the highest use frequency among the candidate texts in the account data of the user 2 is associated with "You Quiz on the Block," the server 400 may transmit to the electronic device 100 the result of intent analysis performed for "You Quiz on the Block." For example, if the user 2 is a female in her 40s, and among female users in their 40s, the usage ratio is 10% for "New Quiz on the Block," 20% for "New Kids on the Block," and 70% for "You Quiz on the Block," the server 400 may transmit to the electronic device 100 the result of intent analysis performed for "Search for You Quiz on the Block."

The electronic device 100 may output an object 1740 corresponding to "New Kids on the Block" based on the data related to the candidate text received from the server 400. At this time, when the user selects the object 1740 corresponding to "New Kids on the Block," the electronic device 100 may request the server 400 to perform intent analysis for "Search for New Kids on the Block."

Referring to FIG. 18, the electronic device 100 may output text 1820 corresponding to the voice input 1810 uttered by the user 2. For example, the electronic device 100 may output the text 1820 corresponding to the voice input 1810 uttered by the user 2 based on the result of intent analysis performed for the spoken text received from the server 400.

The electronic device 100 may provide a search result 1830 for songs of "New Kids on the Block" based on the result of intent analysis performed for the spoken text received from the server 400. For example, if the highest use frequency among the candidate texts in the account data of user 2 is associated with "New Kids on the Block," the server 400 may transmit to the electronic device 100 the result of intent analysis performed for "Search for New Kids on the Block." For example, if user 2 is a male in her 60s, and among female users in their 60s, the usage ratio is 20% for "New Quiz on the Block," 50% for "New Kids on the Block," and 30% for "You Quiz on the Block," the server 400 may transmit to the electronic device 100 the result of intent analysis performed for "Search for New Kids on the Block."

The electronic device 100 may output an object 1840 corresponding to "You Quiz on the Block" based on the candidate text data received from the server 400. At this time, when the user selects the object 1840 corresponding to "You Quiz on the Block," the electronic device 100 may request the server 400 to perform intent analysis for "Search for You Quiz on the Block."

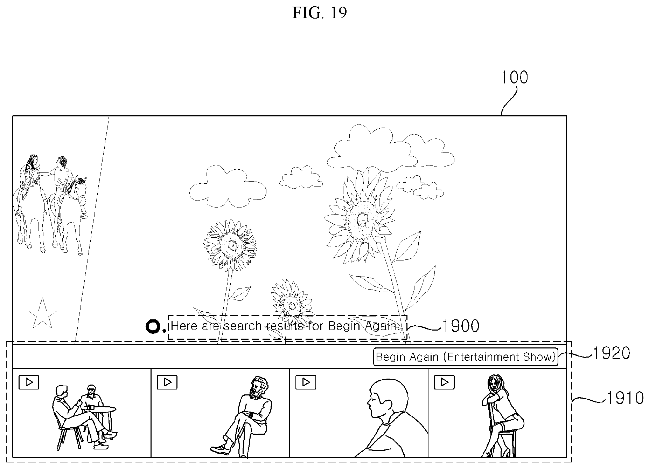

Referring to FIGS. 19 to 21, the user may utter a voice command to search for specific content, "Begin Again." The electronic device 100 may transmit voice data including a voice signal corresponding to the voice inputs uttered by the user to the server 400.

The server 400 may determine "Begin Again" as the spoken text from among a plurality of candidate texts corresponding to the voice inputs uttered by the user. The server 400 may generate a result of intent analysis performed for the search of "Begin Again" based on the type of "Begin Again."

The server 400 may determine the type of "Begin Again" based on the user's account data. For example, the server 400 may determine the type of "Begin Again" based on the user's preferred genre included in the user's account data. For example, the server 400 may determine the type of "Begin Again" based on the usage history of the type of "Begin Again" included in the user's account data. At this time, the server 400 may determine one of the types, "Movie" and "Entertainment Show," with the highest use frequency as the type of "Begin Again."

The server 400 may determine the type of the spoken text based on the usage history of the type of spoken text associated with the user characteristics stored in the database 490. For example, if the user is a female in her 30s, the server 400 may check the usage histories of "Begin Again" with the genre "Movie" and "Begin Again" with the genre "Entertainment Show" by female users in their 30s from the database 490. At this time, the server 400 may determine, as the spoken text, one of the types, "Movie" and "Entertainment Show," that has been used most frequently.

Referring to FIG. 19, the electronic device 100 may output the text 1900 corresponding to the voice input uttered by the user.

The electronic device 100 may provide a search result 1910 for "Begin Again" with the genre "Movie" based on the result of intent analysis performed for the spoken text received from the server 400. For example, if the genre preferred by the user is "Movie", the server 400 may transmit to the electronic device 100 the result of intent analysis performed for "Begin Again" with the genre "Movie." For example, if the user 1 is a female in her 30s, and among female users in their 30s, the usage ratio is 45% for "Begin Again" with the genre "Movie" and 30% for "Begin Again" with the genre "Entertainment Show," the server 400 may transmit to the electronic device 100 the result of intent analysis performed for "Begin Again" with the genre "Movie."

The electronic device 100 may output an object 1920 corresponding to "Begin Again" with the genre "Entertainment Show" based on the data related to the type of "Begin Again" received from the server 400. At this time, when the user selects the object 1920 corresponding to "Entertainment Show," the electronic device 100 may request a search result for "Begin Again" with the genre "Entertainment Show" from the server 400.

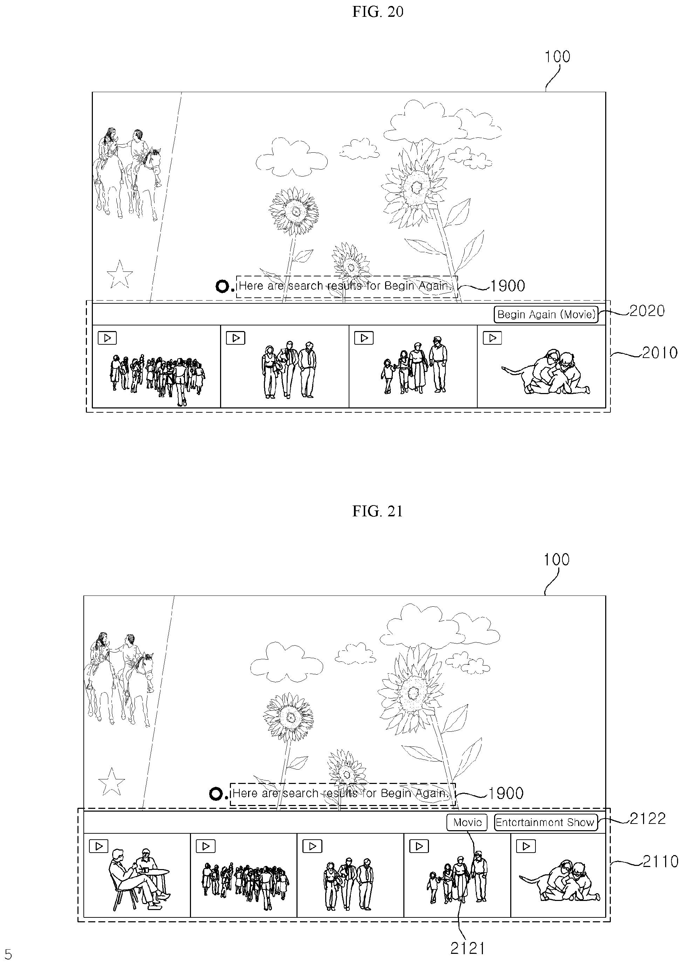

Referring to FIG. 20, the electronic device 100 may provide a search result 2010 for "Begin Again" with the genre "Entertainment Show," based on the result of intent analysis performed for the spoken text received from the server 400. For example, the server 400 may transmit a search result for "Begin Again" with the genre "Entertainment Show" to the electronic device 100 based on the fact that the user's preferred genre is "Entertainment Show." For example, if the user 1 is a male in his 20s, and the usage ratio of "Begin Again" with the genre "Movie" among male users in their 20s is 25%, while the usage ratio of "Begin Again" with the genre "Entertainment Show" is 45%, the server 400 may transmit the search result for "Begin Again" with the genre "Entertainment Show" to the electronic device 100.

The electronic device 100 may output an object 2020 corresponding to "Movie" which is the type of "Begin Again" based on the data indicating the type of "Begin Again" received from the server 400. At this time, when the user selects the object 2020 corresponding to "Movie," the electronic device 100 may request a search result for "Begin Again" with the genre "Movie" from the server 400.

Referring to FIG. 21, the server 400 may transmit search results for "Begin Again" with the genre "Movie" and "Begin Again" with the genre "Entertainment Show" to the electronic device 100. For example, the server 400 may transmit search results for "Begin Again" with the genre "Movie" and "Begin Again" with the genre "Entertainment Show" to the electronic device 100 based on the user's preferred genres are "Movie" and "Entertainment Show." For example, if the user 1 is a male in his 20s, and among male users in their 30s, the usage ratio for "Begin Again" with the genre "Movie" is 45%, while the usage ratio for "Begin Again" with the genre "Entertainment Show" is 40%, and the difference in usage frequency between the two types is within a predetermined threshold (e.g., 5%), the server 400 may transmit search results for "Begin Again" with the genre "Movie" and "Begin Again" with the genre "Entertainment Show" to the electronic device 100.

The electronic device 100 may provide a search result 2110 for "Begin Again" with the genre "Movie" and "Begin Again" with the genre "Entertainment Show," based on the result of intent analysis performed for the spoken text received from the server 400. For example, if the usage ratio of "Begin Again" with the genre "Movie" is higher than the usage ratio of "Begin Again" with the genre "Entertainment Show," the search result related to the "Movie" genre may be provided before the result related to the "Entertainment Show" genre.

The electronic device 100 may output an object 2121 corresponding to the type "Movie" and an object 2122 corresponding to the type "Entertainment Show" for "Begin Again," based on the data indicating the type of "Begin Again" received from the server 400. At this time, when the user selects any one of a plurality of objects 2121 and 2122, the electronic device 100 may request the server 400 to provide a search result for "Begin Again" with the genre selected by the user.

As described above, according to at least one embodiment of the present disclosure, identification information for the user's voice may be registered to the user's account.

Also, according to at least one embodiment of the present disclosure, a user may be identified based on the user's voice.

Also, according to at least one embodiment of the present disclosure, based on the user's characteristics identified from voice input, accuracy of a result of processing the user voice may be improved.

Also, according to at least one embodiment of the present disclosure, based on the user's characteristics included in the data related to the user account, accuracy of a result of processing the user voice may be improved.

Also, according to at least one embodiment of the present disclosure, a database used for processing user voice may be updated using the usage history of the user.

Referring to FIGS. 1 to 21, a server 400 according to one aspect of the present disclosure comprises a communication interface 480 that communicates with an electronic device 100, a database 490 that stores usage histories of text classified by characteristics, and a controller 470, wherein the controller 470 generates a plurality of first texts corresponding to a voice signal received from the electronic device 100, generates first identification information corresponding to the voice signal, obtains one or more user characteristics of the user corresponding to the voice signal based on the first identification information, determines a second text corresponding to the voice signal among the plurality of first texts based on a first text history describing how each of the plurality of first texts is used in association with the user characteristics among the usage histories of text classified by characteristics, and transmits a result of performing intent analysis for the second text to the electronic device 100.

Also, according to one aspect of the present disclosure, the first identification information may include a feature vector for a voice print of the voice signal.

Also, according to one aspect of the present disclosure, the user characteristics may include at least one of age and gender.

Also, according to one aspect of the present disclosure, the database 490 may store identification information corresponding to a user account and account data for the user account, wherein the controller 470 acquires the user characteristics from the account data corresponding to the second identification information when second identification information corresponding to the first identification information is stored in the database 490 and acquires the user characteristics from the first identification information when the second identification information is not stored in the database 490, or the account data corresponding to the second identification information does not include the user characteristics.

Also, according to one aspect of the present disclosure, the controller 470 may receive a user list including at least one piece of user identification information from the electronic device 100, searches the database 490 for third identification information corresponding to the user identification information included in the user list, and determines the second identification information by comparing the first identification information with the third identification information.

Also, according to one aspect of the present disclosure, the account data for the user account stored in the database 490 may include a usage history of texts by the user, wherein the controller 470 determines the second text based on a second text history when the account data corresponding to the second identification information includes the second text history in which at least one of the plurality of first texts has been used and determines the second text based on the first text history when the account data corresponding to the second identification information does not include the second text history.

Also, according to one aspect of the present disclosure, the database 490 may store a usage history of text type according to characteristics, wherein the controller 470 determines type of the second text based on a first type history in which the type of the second text has been used in relation to the user characteristics among the usage histories of text types according to characteristics and generates a result of intent analysis performed for the second text based on the determined type.

Also, according to one aspect of the present disclosure, the account data for the user account may include a usage history of the type of text by a user, wherein the controller 470 determines the type of the second text based on the second type history when the account data corresponding to the second identification information includes the second type history in which the type of the second text has been used and determines the type of the second text based on the first type history when the account data corresponding to the second identification information does not include the second type history.

A system 10 according to one aspect of the present disclosure includes an electronic device 100 and a server 400, wherein the electronic device 100 transmits data including a speech signal to the server 400 when the voice signal is received through a user input interface and outputs a result of performing intent analysis on the voice signal received from the server 400, wherein the server 400 generates a plurality of first texts corresponding to the voice signal received from the electronic device 100, generates first identification information corresponding to the voice signal, obtains a user characteristics corresponding to the voice signal based on the first identification information, determines a second text corresponding to the voice signal among the plurality of first texts based on a first text history describing how each of the plurality of first texts is used in association with the user characteristics among usage histories of text classified by characteristics stored in a database of the server, and transmits a result of performing intent analysis for the second text to the electronic device 100 as a result of performing intent analysis on the voice signal.

Also, according to one aspect of the present disclosure, the server 400 may transmit at least one of the remaining first texts among the plurality of first texts, excluding the second text, to the electronic device 100, wherein the electronic device 100 may output, through the display 180, a text object corresponding to the at least one of the remaining first texts among the plurality of first texts and request the server 400 to perform intent analysis for the text corresponding to the selected text object based on a user input selecting the text object.

Also, according to one aspect of the present disclosure, the database 490 may store identification information corresponding to a user account and account data for the user account, wherein the server 400 acquires the user characteristics from the account data corresponding to the second identification information when second identification information corresponding to the first identification information is stored in the database 490 and acquires the user characteristics from the first identification information when the second identification information is not stored in the database 490, or the account data corresponding to the second identification information does not include the user characteristics.

Also, according to one aspect of the present disclosure, the electronic device 100 may transmit a user list including at least one piece of user identification information to the server 400, wherein the server 400 searches the database 490 for third identification information corresponding to the user identification information included in the user list and determines the second identification information by comparing the first identification information with the third identification information.

Also, according to one aspect of the present disclosure, the database 490 may store a usage history of text type according to characteristics, wherein the server 400 determines type of the second text based on a first type history in which the type of the second text has been used in relation to the user characteristics among the usage histories of text types according to characteristics and generates a result of intent analysis performed for the second text based on the determined type.

Also, according to one aspect of the present disclosure, the account data for the user account may include a usage history of the type of text by a user, wherein the server 400 determines the type of the second text based on the second type history when the account data corresponding to the second identification information includes the second type history in which the type of the second text has been used and determines the type of the second text based on the first type history when the account data corresponding to the second identification information does not include the second type history.

Also, according to one aspect of the present disclosure, the server 400 may transmit at least one type corresponding to the second text to the electronic device 100, wherein the electronic device 100 outputs, through the display 180, a type object corresponding to the at least one type corresponding to the second text and requests the server 400 to perform intent analysis for the type corresponding to the selected type object based on a user input selecting the type object.

The attached drawings are only for easy understanding of the embodiments disclosed in this specification, and the technical idea disclosed in this specification is not limited by the attached drawings, and all changes, equivalents, and changes included in the technical scope of the present disclosure are not limited thereby.

Meanwhile, the operating method of the present disclosure may be implemented as processor-readable code on a processor-readable recording medium. Processor-readable recording media include all types of recording devices that store data that may be read by a processor. Examples of processor-readable recording media include a ROM, a RAM, a CD-ROM, a magnetic tape, a floppy disk, and an optical data storage device, and also include those implemented in the form of a carrier wave, such as transmission through the Internet. Additionally, a processor-readable recording medium is distributed in a computer system connected to a network, and thus processor-readable code may be stored and executed in a distributed manner.

**Claims**

1. A server (400) comprising:

    a communication interface (480) configured to communicate with an electronic device (100);
    a database (490) configured to store usage histories of text classified by characteristics; and
    a controller (470) configured to:

        generate a plurality of first texts corresponding to a voice signal received from the electronic device (100),
        generate first identification information corresponding to the voice signal,
        obtain one or more user characteristics corresponding to the voice signal based on the first identification information,
        determine a second text corresponding to the voice signal among the plurality of first texts based on a first text history describing how each of the plurality of first texts is used in association with the user characteristics among the usage histories of text classified by characteristics, and
        transmit a result of performing intent analysis for the second text to the electronic device (100).

2. The server (400) of claim 1, wherein the first identification information includes a feature vector for a voice print of the voice signal.

3. The server (400) of claim 1, or 2, wherein the user characteristics include at least one of age and gender.

4. The server (400) of claim 1, wherein the database (490) stores identification information corresponding to a user account and account data for the user account,
    wherein the controller (470) is configured to:

        acquire the user characteristics from the account data corresponding to the second identification information when second identification information corresponding to the first identification information is stored in the database (490), and
        acquire the user characteristics from the first identification information when the second identification information is not stored in the database (490), or the account data corresponding to the second identification information does not include the user characteristics.

5. The server (400) of claim 4, wherein the controller (470) is configured to:

        receive a user list including at least one piece of user identification information from the electronic device (100),
        search the database (490) for third identification information corresponding to the user identification information included in the user list, and
determine the second identification information by comparing the first identification information with the third identification information.

6. The server (400) of claim 4, or 5, wherein the account data for the user account stored in the database (490) includes a usage history of texts by the user,
wherein the controller (470) is configured to:

determine the second text based on a second text history when the account data corresponding to the second identification information includes the second text history in which at least one of the plurality of first texts has been used, and
determine the second text based on the first text history when the account data corresponding to the second identification information does not include the second text history.

7. The server (400) of claim 4, 5, or 6, wherein the database (490) stores usage histories of text types according to characteristics,
wherein the controller (470) is configured to:

determine type of the second text based on a first type history in which the type of the second text has been used in relation to the user characteristics among the usage histories of text types according to characteristics, and
generate a result of intent analysis performed for the second text based on the determined type.

8. The server (400) of claim 7, wherein the account data for the user account includes a usage history of the type of text by a user,
wherein the controller is configured to:

determine the type of the second text based on the second type history when the account data corresponding to the second identification information includes the second type history in which the type of the second text has been used, and
determine the type of the second text based on the first type history when the account data corresponding to the second identification information does not include the second type history.

9. A system (10) comprising:

an electronic device (100) and a server (400),
wherein the electronic device (100) is configured to:

transmit data including a speech signal to the server (400) when the voice signal is received through a user input interface, and
output a result of performing intent analysis on the voice signal received from the server (400),
wherein the server (400) is configured to:

generate a plurality of first texts corresponding to the voice signal received from the electronic device (100),
generate first identification information corresponding to the voice signal,
obtain one or more user characteristics corresponding to the voice signal based on the first identification information,
determine a second text corresponding to the voice signal among the plurality of first texts based on a first text history describing how each of the plurality of first texts is used in association with the user characteristics among usage histories of text classified by characteristics stored in a database (490) of the server (400), and
transmits a result of performing intent analysis for the second text to the electronic device (100) as a result of performing intent analysis on the voice signal.

10. The system (10) of claim 9, wherein the server (400) is configured to transmit at least one of the remaining first texts among the plurality of first texts, excluding the second text, to the electronic device (100),
wherein the electronic device (100) is configured to:

output, through the display, a text object corresponding to the at least one of the remaining first texts among the plurality of first texts, and

request the server (400) to perform intent analysis for the text corresponding to the selected text object based on a user input selecting the text object.

11. The system (10) of claim 9, or 10, wherein the database (490) stores identification information corresponding to a user account and account data for the user account,
   wherein the server (400) is configured to:

   acquire the user characteristics from the account data corresponding to the second identification information when second identification information corresponding to the first identification information is stored in the database (490) and
   acquire the user characteristics from the first identification information when the second identification information is not stored in the database (490), or the account data corresponding to the second identification information does not include the user characteristics.

12. The system (10) of claim 11, wherein the electronic device (100) is configured to transmit a user list including at least one piece of user identification information to the server (400),
   wherein the server (400) is configured to:

   search the database (490) for third identification information corresponding to the user identification information included in the user list and
   determine the second identification information by comparing the first identification information with the third identification information.

13. The system (10) of claim 11, or 12, wherein the database (490) stores usage histories of text types according to characteristics,
   wherein the server (400) is configured to:

   determine type of the second text based on a first type history in which the type of the second text has been used in relation to the user characteristics among the usage histories of text types according to characteristics and
   generate a result of intent analysis performed for the second text based on the determined type.

14. The system (10) of claim 13, wherein the account data for the user account includes a usage history of the type of text by a user,
   wherein the server (400) is configured to:

   determine the type of the second text based on the second type history when the account data corresponding to the second identification information includes the second type history in which the type of the second text has been used, and
   determines the type of the second text based on the first type history when the account data corresponding to the second identification information does not include the second type history.

15. The system (10) of claim 13, or 14, wherein the server is configured to transmit at least one type corresponding to the second text to the electronic device (100),
   wherein the electronic device (100) is configured to:

   output, through the display, a type object corresponding to the at least one type corresponding to the second text, and
   request the server to perform intent analysis for the type corresponding to the selected type object based on a user input selecting the type object.

FIG. 1

FIG. 2

External device interface 130

Network interface 135

Tuner 110

Demodulator 120

105

100

Remote control device 200

User input interface 150

Controller

Storage 140

170

Power supply 190

Audio output 185

Display 180

Input part 160

FIG. 3

FIG. 4

400

460          470

| Preprocessor | Controller |

461 — Waver processor

462 — Frequency processor     Speech analyzer 471     Feature clustering part 473     Speech synthesizer 475

463 — Power spectrum processor

464 — STT converter     Text analyzer 472     Text mapper 474

Communication interface 480     Database 490

FIG. 5

510

520

FIG. 6

170

STT engine ~610

NLP engine ~620

Speech synthesis engine ~630

Preprocessing engine ~640

TTS engine ~650

FIG. 7

Start

S701
Logged in to the account?
No →
Yes ↓

S702
Voice ID pre-registered?
Yes →
No ↓

S703
Start registration of the voice ID

S704
Output text

S705
Voice input?
No →
Yes ↓

S706
Transmit voice data

S707
Speech processing successful?
No →
Yes ↓

S709
Processing of all text completed?
No →
Yes ↓

S708
Reattempt voice input?
Yes →
No ↓

S710
Complete registration of voice ID

End

EP 4 685 791 A1

FIG. 8

100                                                          400

┌─────────────────┐                          ┌─────────────┐
│ Electronic device │                          │   Server    │
└─────────────────┘                          └─────────────┘

Logged in to the account(S801)

Start registration
of voice ID(S802)

Output first text(S803)

Receive a first voice(S804)

First voice data(S805)

Process the first voice(S806)

Complete processing of the first voice(S807)

Store the first voice and
voiceprint information(S808)

⋮

Output sixth text(S809)

Receive a sixth voice(S810)

Sixth voice data(S811)

Process the sixth voice(S812)

Complete processing of the sixth voice(S813)

Store the sixth voice and
voiceprint information(S814)

Complete registration
of voice ID(S815)

30

FIG. 9

900

Voice ID management
You may register a new voice or delete a voice.

You're not logged in.

Please log in for registration and management of voice ID.

Log in

910          920          205

FIG. 10

1000

Voice ID management
You may register a new voice or delete a voice.

There is no registered voice ID.

* When you register your voice, you may use it as a voice ID
  for an easier login process.

Register voice ID

Henry
Henry@xxx_com

1010          1020          205

FIG. 11

1100

Voice ID management
You may register a new voice or delete a voice.

Henry
Honry@xxx_com

1110

Use voice ID function on this TV

A voice ID is already registered.

Register again          Delete

1120          1130

1140

205

FIG. 12

1200

❮ Exit          ✓  2  3

Register voice ID

LG ThinQ learns to recognize your voice. By registering your voice
ID with your account, LG ThinQ let you automatically log in under your
account, giving you personalized contents and services.

● For more accurate recognition, please minimize surrounding noise and
   start the registration process.
● When voice ID is used, the password entry step is skipped during account
   switching.
● Someone with a similar voice may unlock your account, and your voice may
   not be recognized properly if your voice is changed due to temporary health
   reasons.

Start

1210

205

FIG. 13

1300

1 ✓ 3

< Back

## Register voice ID

After pressing the voice recording button, please speak the sentence shown on the screen.

Please search for the program that airs at 7 PM today. ⟶1301

1/6 ⟶1302

205

Exit    Record Voice

1310    1320

FIG. 14

```
                    ┌─────────┐
                    │  Start  │
                    └─────────┘
                         │
                         ▼
          ┌──────────────────────────────┐
          │     Receive a voice signal    │──S1410
          └──────────────────────────────┘
                         │
                         ▼
          ┌──────────────────────────────┐
          │ Generate voice print information│──S1420
          └──────────────────────────────┘
                         │
                         │              S1430
                         ▼
                    ╱ Exists a user ╲
      No       ╱ account corresponding ╲
   ◄──────────    to the voice signal?
                    ╲               ╱
                         │
                        Yes
                         ▼
          ┌──────────────────────────────┐
          │   Acquire user account data   │──S1440
          └──────────────────────────────┘
                         │
                         │              S1450
                         ▼
                    ╱ User's characteristics ╲    Yes
                    ╲     included?          ╱ ──────►
                         │
                         No
                         ▼
          ┌──────────────────────────────┐
          │ Acquire the user's characteristics│──S1460
          │  from the voice print information │
          └──────────────────────────────┘
                         │
                         ▼
          ┌──────────────────────────────┐
          │ Determine text corresponding  │──S1470
          │     to the voice signal       │
          └──────────────────────────────┘
                         │
                         ▼
          ┌──────────────────────────────┐
          │     Perform intent analysis   │──S1480
          └──────────────────────────────┘
                         │
                         ▼
                    ┌─────────┐
                    │   End   │
                    └─────────┘
```

FIG. 15

FIG. 16

100

Here are search results for Son Ga-in's songs ⟶ 1620

Song Ga-in's ⟶ 1640

⟶ 1630

1610

Search for Song
Ga-in's (Son Ga-in's)
songs

1

FIG. 17

FIG. 18

100

Here are search results for You Quiz on the Block. ~1820

New Kids on the Block ~1840

1830

1810

Search for New
Quiz on the Block

2

FIG. 19

FIG. 20

100

Here are search results for Begin Again. ~1900

Begin Again (Movie) ~2020

~2010

FIG. 21

100

Here are search results for Begin Again. ~1900

Movie  Entertainment Show ~2122

~2110

2121

Europäisches
Patentamt

European
Patent Office

Office européen
des brevets

# EUROPEAN SEARCH REPORT

**Application Number**

EP 25 19 0439

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 110 288 985 B (BEIJING ORION STAR TECH CO LTD) 8 March 2022 (2022-03-08) * figures 1,2 * * page 9, paragraphs 1-2,5 * * page 15, paragraph 4 - page 15, paragraph 5 * * page 12, last paragraph * * page 17, paragraph 3 * * page 6, paragraph 6 * * page 15, paragraph 3 * * page 8, paragraph 1 * ----- | 1-15 | INV. G10L15/26 G06F40/30 G10L17/00 G10L15/18 |
| Y | US 11 437 026 B1 (ROSHAN GHIAS ALIREZA [US] ET AL) 6 September 2022 (2022-09-06) * figures 1,5A * ----- | 1-15 | |
| A | US 2023/335124 A1 (VELIKOVICH LEONID ALEKSANDROVICH [US] ET AL) 19 October 2023 (2023-10-19) * figure 1 * ----- | 1-15 | |
| A | CN 116 541 493 A (PING AN TECH SHENZHEN CO LTD) 4 August 2023 (2023-08-04) * paragraph [0076] * ----- | 1-15 | TECHNICAL FIELDS SEARCHED (IPC) G10L G06F |

The present search report has been drawn up for all claims

| Place of search | Date of completion of the search | Examiner |
|---|---|---|
| Munich | 7 November 2025 | Chétry, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 0439

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | | Publication date | Patent family member(s) | | Publication date |
|---|---|---|---|---|---|
| CN 110288985 | B | 08-03-2022 | NONE | | |
| US 11437026 | B1 | 06-09-2022 | NONE | | |
| US 2023335124 | A1 | 19-10-2023 | EP | 4487320 A1 | 08-01-2025 |
| | | | JP | 2025512416 A | 17-04-2025 |
| | | | US | 2023335124 A1 | 19-10-2023 |
| | | | WO | 2023200923 A1 | 19-10-2023 |
| CN 116541493 | A | 04-08-2023 | NONE | | |

EPO FORM P0459

For more details about this annex : see Official Journal of the European Patent Office, No. 12/82